# EUROPÄISCHE PATENTSCHRIFT

(11) **EP 3 868 010 B1**
(45) Veröffentlichungstag und Bekanntmachung des Hinweises auf die Patenterteilung: **19.08.2026**
(21) Anmeldenummer: 19789669.9
(22) Anmeldetag: 15.10.2019
(51) Int. Cl.: H02M 7/757, H02M 7/219, H02M 1/10, H02M 1/12, H02M 1/14, H02M 1/40

(54) **MEHRPHASIGE UMRICHTERTOPOLOGIE FÜR MEHRPHASIGEN UND EINPHASIGEN BETRIEB**
MULTIPHASE CONVERTER TOPOLOGY FOR MULTIPHASE AND SINGLE-PHASE OPERATION
TOPOLOGIE DE CONVERTISSEUR STATIQUE POLYPHASÉE POUR FONCTIONNEMENT POLYPHASÉ ET MONOPHASÉ

(30) Priorität: 15.10.2018 CH 12552018
(43) Veröffentlichungstag der Anmeldung: 25.08.2021
(73) Patentinhaber: Prodrive Technologies Innovation Services B.V., 5692 EM Son en Breugel (NL)
(72) Erfinder: KOLAR, Johann Walter, 8044 Zürich (CH); PAPAMANOLIS, Panteleimon, 8051 Zürich (CH); KRISMER, Florian, 8954 Geroldswil (CH)
(74) Vertreter: Arnold & Siedsma
(86) Internationale Anmeldenummer: PCT/EP2019/078002
(87) Internationale Veröffentlichungsnummer: WO 2020/079019

(56) Entgegenhaltungen:
- EP-A1- 2 892 136
- EP-A1- 3 242 382
- WO-A1-2020/064429
- CN-A- 107 947 309
- GB-A- 2 541 705
- US-A- 4 184 075
- US-A1- 2014 035 492
- BOILLAT DAVID OLIVIER ET AL: "EMI Filter Volume Minimization of a Three-Phase, Three-Level T-Type PWM Converter System", IEEE TRANSACTIONS ON POWER ELECTRONICS, INSTITUTE OF ELECTRICAL AND ELECTRONICS ENGINEERS, USA, vol. 32, no. 4, 1 April 2017 (2017-04-01), pages 2473 - 2480, XP011639835, ISSN: 0885-8993, [retrieved on 20170123], DOI: 10.1109/TPEL.2016.2617085

## Beschreibung

Eine mehrphasige Umrichtertopologie dient dazu, von einem Versorgungsnetz an einem Wechselspannungseingang zur Verfügung gestellten Wechselspannungen in eine an einem Gleichspannungsausgang vorliegende Gleichspannung umwandeln. Der Betrieb der mehrphasigen Umrichtertopologie soll sowohl von einem mehrphasigen als auch von einem einphasigen Versorgungsnetz möglich sein. Die Anzahl der vorliegenden Netzphasen des Versorgungsnetzes wird mit *m, m* > 1, bezeichnet (in der Regel liegt *m* = 3 vor).

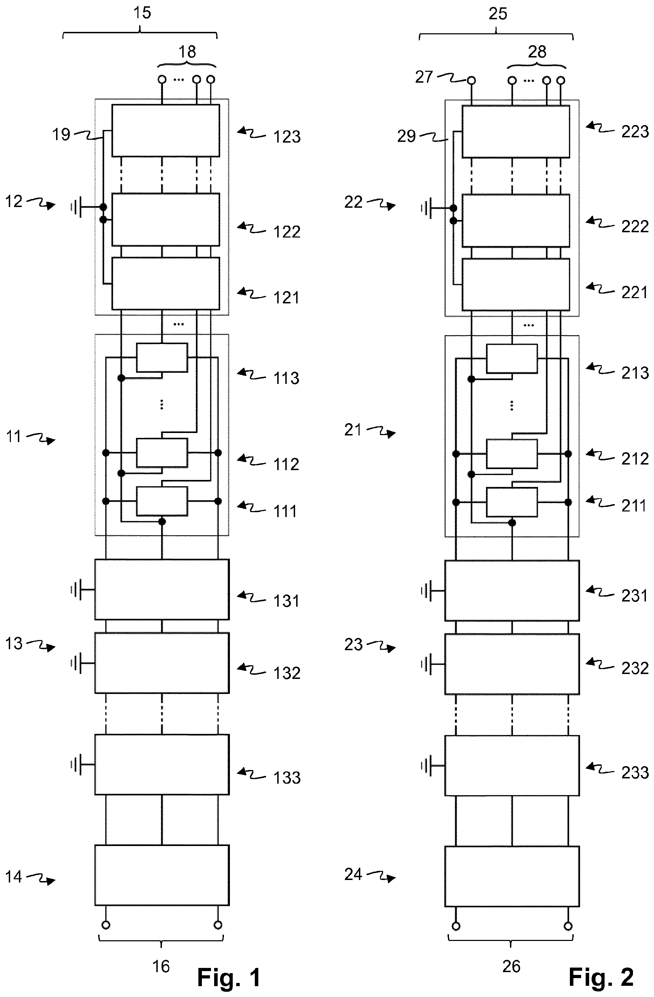

Grundsätzlich lassen sich bereits mit einer konventionellen mehrphasigen Umrichtertopologie der mehrphasige und der einphasige Betrieb realisieren, d.h. ein Betrieb in Verbindung mit einem mehrphasigen respektive einphasigen Versorgungsnetz an der Wechselspannungsseite. Eine konventionelle mehrphasige Umrichtertopologie ist in Fig. 1 schematisch dargestellt und weist einen Netzspannungseingang 15 (aufweisend *m* Netzphasenanschlüsse 18 und einen Erdungsanschluss 19), einen Gleichspannungsausgang 16 (aufweisend einen Plus- und einen Minusanschluss) und folgende Basiskomponenten auf:
- Ein **Netzfilter** 12 aufweisend *m* Netzphasenanschlüsse, einen Erdungsanschluss, *m* Schaltspannungsanschlüsse und einen Mittelpunktspannungsanschluss. Das Netzfilter weist w Netzfilterstufen 121, 122, 123 auf, wobei die Variable '*w*' ganzzahlige Werte grösser oder gleich Eins annehmen kann. Jede Netzfilterstufe weist *m* + 1 Eingangsanschlüsse, *m* + 1 Ausgangsanschlüsse und einen Erdungsanschluss auf. Für 1 ≤ *k* ≤ *m* gilt:
   ∘ Der *k*-te Ausgangsanschluss der ersten Netzfilterstufe 121 bildet den *k-*ten Schaltspannungsanschluss des Netzfilters 12.
   ∘ Der *k*-te Eingangsanschluss der *w*-ten Netzfilterstufe bildet den *k*-ten Netzphasenanschluss des Netzfilters 12und somit den *k-*ten Netzphasenanschluss des Netzspannungseingangs 14 der mehrphasigen Umrichtertopologie.
   Der (*m*+1)-te Ausgangsanschluss der ersten Netzfilterstufe 121 bildet den Mittelpunktspannungsanschluss des Netzfilters. Bei *w* > 1 gilt für 1 ≤ *k* ≤ *m+*1 und 1 ≤ *u < w*, dass der *k*-te Eingangsanschluss der *u*-ten Netzfilterstufe mit dem *k*-ten Ausgangsanschluss der (*u*+1)-ten Netzfilterstufe verbunden ist. Die Erdungsanschlüsse aller Netzfilterstufen sind miteinander verbunden und bilden den Erdungsanschluss des Netzfilters, welcher mit dem Erdungsanschluss des Netzspannungseingangs der mehrphasigen Umrichtertopologie verbunden ist.
- Einen **Leistungsteil** 11 aufweisend einen Plusanschluss, einen Minusanschluss, einen Mittelpunktspannungsanschluss, *m* Schaltspannungsanschlüsse und *m* **Halbbrücken** 111, 112, 113 jeweils aufweisend einen Plusanschluss, einen Minusanschluss, einen Mittelpunktspannungsanschluss und einen Schaltspannungsanschluss. Die Plusanschlüsse aller *m* Halbbrücken sind miteinander verbunden und bilden den Plusanschluss des Leistungsteils. Die Mittelpunktspannungsanschlüsse aller *m* Halbbrücken sind miteinander verbunden und bilden den Mittelpunktspannungsanschluss des Leistungsteils. Die Minusanschlüsse aller *m* Halbbrücken sind miteinander verbunden und bilden den Minusanschluss des Leistungsteils. Für 1 ≤ *k* ≤ *m* gilt: der Schaltspannungsanschluss der *k*-ten Halbbrücke bildet den *k*-ten Schaltspannungsanschluss des Leistungsteils.
- Einen oder mehrere **Gleichspannungsblöcke** 13; 131, 132, 133 jeweils aufweisend einen Erdungsanschluss, einen Eingangsklemmblock, aufweisend einen Plusanschluss, einen Mittelpunktspannungsanschluss und einen Minusanschluss, und einen Ausgangsklemmblock, aufweisend einen Plusanschluss, einen Mittelpunktspannungsanschluss und einen Minusanschluss. Die Anzahl der Gleichspannungsblöcke wird mit *g* bezeichnet und *g* kann ganzzahlige Werte grösser oder gleich Eins annehmen. Je nach Ausführungsform des Gleichspannungsblocks können der Mittelpunktspannungsanschluss des Eingangsklemmblocks des Gleichspannungsblocks, der Mittelpunktspannungsanschluss des Ausgangsklemmblocks des Gleichspannungsblocks oder die Mittelpunktspannungsanschlüsse der Eingangs- und Ausgangsklemmblöcke entfallen. Die Erdungsanschlüsse aller Gleichspannungsblöcke sind mit dem Erdungsanschluss des Netzspannungseingangs der mehrphasigen Umrichtertopologie verbunden. Falls *g* > 1 gilt, so sind die Gleichspannungsblöcke folgendermassen miteinander verbunden, wobei 1 ≤ *f* < *g* gilt:
   ∘ Der Plusanschluss des Ausgangsklemmblocks des *f*-ten Gleichspannungsblocks ist mit dem Plusanschluss des Eingangsklemmblocks des (*f*+1)-ten Gleichspannungsblocks verbunden.
   ∘ Der Mittelpunktspannungsanschluss des Ausgangsklemmblocks des *f-*ten Gleichspannungsblocks ist mit dem Mittelpunktspannungsanschluss des Eingangsklemmblocks des (*f*+1)-ten Gleichspannungsblocks verbunden.
   ∘ Der Minusanschluss des Ausgangsklemmblocks des *f*-ten Gleichspannungsblocks ist mit dem Minusanschluss des Eingangsklemmblocks des (*f*+1)-ten Gleichspannungsblocks verbunden.
- Einen **Gleichspannungswandlerblock** 14 aufweisend einen Eingangsklemmblock, aufweisend einen Plusanschluss, einen Mittelpunktspannungsanschluss und einen Minusanschluss, und einen Ausgangsklemmblock, aufweisend einen Plusanschluss und einen Minusanschluss.

Für 1 ≤ *k* ≤ *m* gilt: der *k*-te Schaltspannungsanschluss des Leistungsteils ist mit dem *k-*ten Schaltspannungsanschluss des Netzfilters verbunden. Der Plusanschluss des Leistungsteils ist mit dem Plusanschluss des Eingangsklemmblocks des ersten Gleichspannungsblocks verbunden. Der Minusanschluss des Leistungsteils ist mit dem Minusanschluss des Eingangsklemmblocks des ersten Gleichspannungsblocks verbunden. Der Mittelpunktspannungsanschluss des Leistungsteils ist mit dem Mittelpunktspannungsanschluss des Netzfilters und dem Mittelpunktspannungsanschluss des Eingangsklemmblocks des ersten Gleichspannungsblocks verbunden.

Der Plusanschluss des Ausgangsklemmblocks des *g*-ten Gleichspannungsblocks ist mit dem Plusanschluss des Eingangsklemmblocks des Gleichspannungswandlerblocks 14 verbunden. Der Mittelpunktspannungsanschluss des Ausgangsklemmblocks des *g*-ten Gleichspannungsblocks ist mit dem Mittelpunktspannungsanschluss des Eingangsklemmblocks des Gleichspannungswandlerblocks verbunden. Der Minusanschluss des Ausgangsklemmblocks des *g*-ten Gleichspannungsblocks ist mit dem Minusanschluss des Eingangsklemmblocks des Gleichspannungswandlerblocks verbunden. Der Plusanschluss des Ausgangsklemmblocks des Gleichspannungswandlerblocks bildet den Plusanschluss des Gleichspannungsausgangs der konventionellen mehrphasigen Umrichtertopologie. Der Minusanschluss des Ausgangsklemmblocks des Gleichspannungswandlerblocks bildet den Minusanschluss des Gleichspannungsausgangs 16 der konventionellen mehrphasigen Umrichtertopologie.

Für den einphasigen Betrieb der konventionellen mehrphasigen Umrichtertopologie sind zwei grundsätzliche Betriebsarten bekannt:
1. Eine erste Phase der konventionellen mehrphasigen Umrichtertopologie wird als Hinleiter verwendet, eine zweite Phase der konventionellen mehrphasigen Umrichtertopologie wird als Rückleiter verwendet und die restlichen Phasen der konventionellen mehrphasigen Umrichtertopologie werden nicht verwendet. Diese Betriebsart ist für *m* = 3 und für den Betrieb mit der verketteten Netzspannung, wie sie z.B. im dreiphasigen Netz bei einem Phasenausfall vorliegt, in
   M. Hartmann, «Ultra-Compact and Ultra-Efficient Three-Phase PWM Rectifier Systems for More Electric Aircraft», PhD Dissertation ETH No. 19755, ETH Zürich, 2011.
   beschrieben und führt, unter der Voraussetzung, dass der pro Phase maximal zulässige Stromeffektivwert im dreiphasigen und einphasigen Betrieb gleich gross ist, zu einer Reduktion der Nennleistung der konventionellen mehrphasigen Umrichtertopologie bei einphasigem Betrieb auf ca. 58% der Nennleistung bei dreiphasigem Betrieb. Erfolgt diese Betriebsart für *m* = 3 nur mit der Phasenspannung (ca. 58% der verketteten Netzspannung) so ist mit einer Reduktion der Nennleistung der konventionellen mehrphasigen Umrichtertopologie auf ca. 33% der Nennleistung bei dreiphasigem Betrieb zu rechnen.
2. Eine oder mehrere Phasen der konventionellen mehrphasigen Umrichtertopologie werden als Hinleiter verwendet, eine oder mehrere Phasen der konventionellen mehrphasigen Umrichtertopologie werden als Rückleiter verwendet und die restlichen Phasen der konventionellen mehrphasigen Umrichtertopologie werden nicht verwendet. Diese Betriebsart ermöglicht ggf. eine Erhöhung der Nennleistung ist aber gerade im praktisch wichtigen Fall *m* = 3 von untergeordneter Bedeutung, da eine Sättigung der im Wechselspannungsfilter vorhandenen Gleichtaktfilterdrosseln auftreten kann.

EP 3242382 beschreibt ein Umrichtersystem zum Umwandeln einer dreiphasigen oder einphasigen Wechselspannung in eine Gleichspannung, wobei das Umrichtersystem drei Umrichterzweige umfasst, wobei jeder Umrichterzweig einen ersten Eingang und einen zweiten Eingang, der mit einer einphasigen Wechselspannung zu versorgen ist und einen ersten Ausgang und einen zweiten Ausgang, die eine Gleichspannung bereitstellen umfasst. Das Umrichtersystem ist dazu ausgelegt, den ersten Eingang jedes Umrichterzweigs mit einer Phase eines Drehstromnetzes und die ersten Eingänge der Umrichterzweige mit einer Phase eines einphasigen Netzes zu verbinden, und die miteinander verbundenen zweiten Eingänge der Umrichterzweige mit einem Sternpunkt des Drehstromnetzes oder das Einphasennetz zu verbinden.

CN 107 947 309 A offenbart einen dreiphasigen Umrichter, der einen dreiphasigen und einen einphasigen Betrieb realisiert, umfassend einen Schalterblock, eine aus drei Drosseln bestehende Drosselgruppe, ein dreiphasiges Gleichrichtermodul und ein DC-Transformationsmodul, die nacheinander verbunden sind. Im einphasigen Betrieb ist die einphasige stromführende Leitung über jeweils zwei Reaktanzen mit dem dreiphasigen Gleichrichtermodul verbunden, und der einphasige Neutralleiter ist direkt mit dem dreiphasigen Gleichrichtermodul verbunden.

**Aufgabe** der vorliegenden Erfindung ist es daher, eine Schaltung zu realisieren, welche am mehrphasigen Netz und am einphasigen Netz betrieben werden kann und im Vergleich zu bekannten mehrphasigen Topologien einen verbesserten einphasigen Betrieb erlaubt. Eine weitere mögliche Aufgabe ist, mindestens annähnernd gleiche Nennleistung für einphasigen und mehrphasigen Betrieb zu realisieren.

Die Aufgabe wird mindestens teilweise gelöst durch die Umrichtertopologie gemäss den Patentansprüchen.

Die mehrphasige Umrichtertopologie zur Übertragung von elektrischer Energie von einem Wechselspannungseingang mit m Netzphasenanschlüssen zu einem Gleichspannungsausgang oder umgekehrt, weist auf:
einen Leistungsteil mit Halbbrücken zum Schalten von Strömen,
ein zwischen den Leistungsteil und dem Wechselspannungseingang geschaltetes Wechselspannungsfilter, aufweisend mindestens eine Wechselspannungsfilterstufe mit *m* + 1 Eingangsanschlüssen, *m* + 1 Ausgangsanschlüssen und einem Erdungsanschluss;
einen oder mehrere zwischen den Leistungsteil und dem Gleichspannungsausgang geschalteten Gleichspannungsblöcke zum Filtern von Gleichspannungen;

Dabei sind
die m Netzphasenanschlüsse parallel zueinander geschaltet und bilden einen ersten Phasenanschluss für den Anschluss einer einphasigen Wechselspannung, und ein Neutralleiteranschluss des Wechselspannungsfilters bildet einen Neutralleiteranschluss des Wechselspannungseingangs und einen zweiten Phasenanschluss für den Anschluss der einphasigen Wechselspannung.

Damit ist es möglich, im einphasigen Betrieb alle Phasenanschlüsse parallel zu schalten, wobei die Phasenströme der m einzelnen Phasen durch die ersten m Wicklungen fliessen, und ein Rückstrom - entsprechend der Summe der Phasenströme - durch die (*m*+1)-ten Wicklung fliesst. Damit kann im einphasigen Betrieb dieselbe Nennleistung wie beim mehrphasigen Betrieb übertragen werden.

In Ausführungsformen weist das Wechselspannungsfilter mindestens eine (m+1)-pha-sige Gleichtaktfilterdrossel auf, welche beim einphasigen Betrieb des universellen mehrphasigen Umrichters nicht sättigt.

Die Gleichtaktfilterdrossel ist also derart dimensioniert, dass beim einphasigen Betrieb auftretende Ströme zu magnetischen Flüssen führen, welche sich im zeitlichen Mittel aufheben.

In Ausführungsformen weist das Wechselspannungsfilter mindestens eine (*m*+1)-pha-sige Gleichtaktfilterdrossel auf, wobei alle m+1 Wicklungen der mindestens einen (m +1)-phasigen Gleichtaktfilterdrossel dieselbe Anzahl Windungen und denselben Wicklungssinn aufweisen.

In Ausführungsformen weisen in den ersten *m* Wicklungen vorliegende Drähte denselben ersten Leiterquerschnitt auf, und ein in der (*m*+1)-ten Wicklung vorliegender Draht weist einen Leiterquerschnitt auf, welcher das *m*-fache des ersten Leiterquerschnitts beträgt.

Die mehrphasige Umrichtertopologie weist erfindungsgemäß einen Gleichspannungswandlerblock mit zwei Gleichspannungswandlem auf, deren
Eingänge wahlweise zwischen einer seriellen und einer parallelen Anordnung umschaltbar sind, und deren Ausgänge parallel geschaltet den Gleichspannungsausgang bilden, wobei der Leistungsteil Halbbrücken aufweist, welche einen Umrichter mit **drei** Spannungsniveaus bilden; und
eine Steuerung die dazu ausgebildet ist, die Umrichtertopologie wahlweise in einem mehrphasigen Betrieb mit drei Spannungsniveaus oder in einem einphasigen Betrieb mit zwei Spannungsniveaus zu betreiben.

Der Leistungsteil weist Halbbrücken zum Schalten von drei Spannungsniveaus auf. Die Ausgänge eines Gleichspannungsblocks bilden den Gleichspannungsausgang.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Umrichtertopologie gemäss dem Stand der Technik;
- Figur 2: eine Umrichtertopologie gemäss der Erfindung;
- Figur 3 - 6: Ausführungsformen von Halbbrücken;
- Figur 7- 9: Ausführungsformen von Wechselspannungsfilterstufen;
- Figur 10-15: Ausführungsformen von Gleichspannungsfilterblöcken;
- Figur 16: eine Ausführungsform eines Gleichspannungswandlers;
- Figur 17-20: Ausführungsformen von Gleichtaktfilterdrosseln; und
- Figur 21-23: Varianten von Umrichtertopologien.

**Fig. 2** zeigt schematisch eine universelle mehrphasige Umrichtertopologie, aufweisend einen Wechselspannungseingang 25 (aufweisend *m* Netzphasenanschlüsse 28, einen Neutralleiteranschluss 27 und einen Erdungsanschluss 29), einen Gleichspannungsausgang 26 (aufweisend einen Plus- und einen Minusanschluss) und folgende Basiskomponenten:
- Ein **Wechselspannungsfilter** 22 aufweisend *m* Netzphasenanschlüsse, einen Neutralleiteranschluss, einen Erdungsanschluss, *m* Schaltspannungsanschlüsse und einen Mittelpunktspannungsanschluss. Das Wechselspannungsfilter 22 weist *w* Wechselspannungsfilterstufen 221, 222, 223 auf, wobei die Variable `*w*` ganzzahlige Werte grösser oder gleich Eins annehmen kann. Jede Wechselspannungsfilterstufe 221, 222, 223 weist *m* + 1 Eingangsanschlüsse, *m* + 1 Ausgangsanschlüsse und einen Erdungsanschluss auf. Für 1 ≤ *k* ≤ *m* gilt:
   ∘ Der *k*-te Ausgangsanschluss der ersten Wechselspannungsfilterstufe 221 bildet den *k*-ten Schaltspannungsanschluss des Wechselspannungsfilters.
   ∘ Der *k*-te Eingangsanschluss der *w*-ten Wechselspannungsfilterstufe bildet den *k*-ten Netzphasenanschluss des Wechselspannungsfilters und somit den *k*-ten Netzphasenanschluss des Netzspannungseingangs der mehrphasigen Umrichtertopologie.
   Der (*m*+1)-te Ausgangsanschluss der ersten Wechselspannungsfilterstufe 221 bildet den Mittelpunktspannungsanschluss des Wechselspannungsfilters. Der (*m+*1)-te Eingangsanschluss der *w*-ten Wechselspannungsfilterstufe bildet den Neutralleiteranschluss des Wechselspannungsfilters und somit den Neutralleiteranschluss des Netzspannungseingangs der mehrphasigen Umrichtertopologie. Bei *w* > 1 gilt für 1 ≤ *k* ≤ *m+*1 und 1 ≤ *u* < *w*, dass der *k*-te Eingangsanschluss der *u*-ten Wechselspannungsfilterstufe mit dem *k*-ten Ausgangsanschluss der (*u*+1)-ten Wechselspannungsfilterstufe verbunden ist. Die Erdungsanschlüsse aller Wechselspannungsfilterstufen sind miteinander verbunden und bilden den Erdungsanschluss des Wechselspannungsfilters, welcher mit dem Erdungsanschluss des Netzspannungseingangs der mehrphasigen Umrichtertopologie verbunden ist.
- Einen **Leistungsteil** 21.
- Einen oder mehrere **Gleichspannungsblöcke** 23.
- Einen **Gleichspannungswandlerblock** 24.

Die Struktur der Verbindungen zwischen den Blöcken kann dieselbe wie bei der Figur 1 sein, ausser es liegt eine im folgenden beschriebene andere Ausführungsform vor.

Für 1 ≤ *k* ≤ *m* gilt: der *k*-te Schaltspannungsanschluss des Leistungsteils 21 ist mit dem *k*-ten Schaltspannungsanschluss des Wechselspannungsfilters 22 verbunden. Der Plusanschluss des Leistungsteils ist 21 mit dem Plusanschluss des Eingangsklemmblocks des ersten Gleichspannungsblocks 231 verbunden. Der Minusanschluss des Leistungsteils 21 ist mit dem Minusanschluss des Eingangsklemmblocks des ersten Gleichspannungsblocks 231 verbunden. Der Mittelpunktspannungsanschluss des Leistungsteils 21 ist mit dem Mittelpunktspannungsanschluss des Wechselspannungsfilters und dem Mittelpunktspannungsanschluss des Eingangsklemmblocks des ersten Gleichspannungsblocks 231 verbunden.

**Ausführungsform der universellen mehrphasigen Umrichtertopologie mit Gleichspannungswandlerblock:** hier gelten folgende Verbindungen:
- Plusanschluss des Ausgangsklemmblocks des g-ten Gleichspannungsblocks 233 mit dem Plusanschluss des Eingangsklemmblocks des Gleichspannungswandlerblocks 24,
- Mittelpunktspannungsanschluss des Ausgangsklemmblocks des g-ten Gleichspannungsblocks 233 mit dem Mittelpunktspannungsanschluss des Eingangsklemmblocks des Gleichspannungswandlerblocks 24,
- Minusanschluss des Ausgangsklemmblocks des g-ten Gleichspannungsblocks 233 mit dem Minusanschluss des Eingangsklemmblocks des Gleichspannungswandlerblocks 24.

Der Plusanschluss des Ausgangsklemmblocks des Gleichspannungswandlerblocks 24 bildet den Plusanschluss des Gleichspannungsausgangs 26 der universellen mehrphasigen Umrichtertopologie. Der Minusanschluss des Ausgangsklemmblocks des Gleichspannungswandlerblocks 24 bildet den Minusanschluss des Gleichspannungsausgangs 26 der universellen mehrphasigen Umrichtertopologie.

### Beispiele für Ausführungsformen der Halbbrücke:

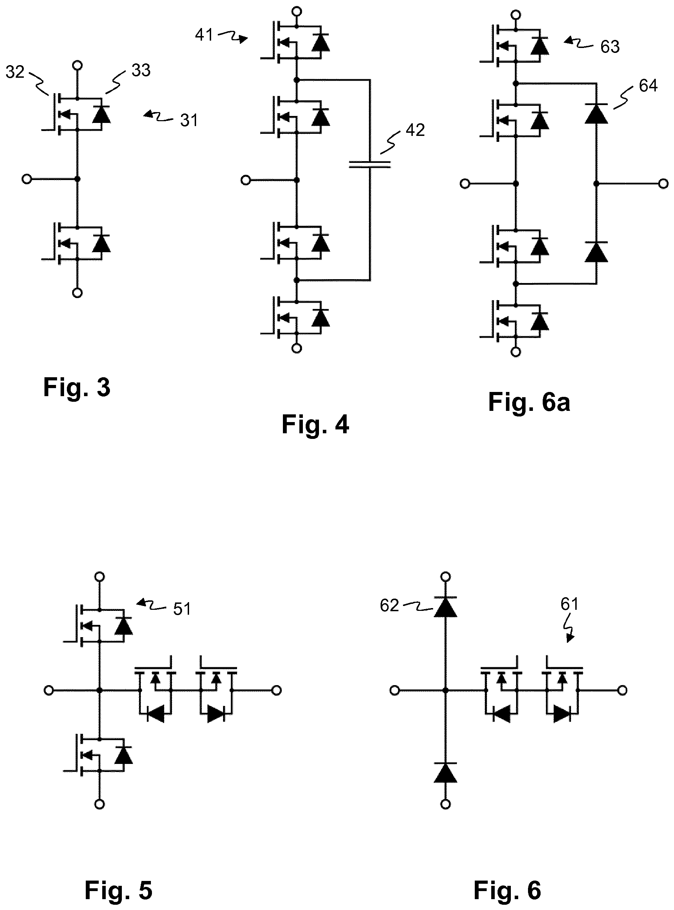

**Eine Ausführungsform der Halbbrücke mit zwei Spannungsniveaus (****Fig. 3****)** weist zwei Leistungsschalter 31, ihrerseits aufweisend die Parallelschaltung eines eigentlichen Schaltelements 32 und einer antiparallelen Diode 33 (falls z.B. ein MOSFET als Leistungsschalter verwendet wird, ist die antiparallele Diode aufgrund der internen Halbleiterstruktur des MOSFETs bereits vorhanden), auf. Die zwei Leistungsschalter der Halbbrücke mit zwei Spannungsniveaus werden so in Serie geschaltet, dass die Anode der antiparallelen Diode des ersten Leistungsschalters der Halbbrücke mit zwei Spannungsniveaus mit der Kathode der antiparallelen Diode des zweiten Leistungsschalters der Halbbrücke mit zwei Spannungsniveaus verbunden ist. Die Halbbrücke mit zwei Spannungsniveaus weist drei Anschlüsse auf: einen Schaltspannungsanschluss der Halbbrücke mit zwei Spannungsniveaus, einen Plusanschluss der Halbbrücke mit zwei Spannungsniveaus und einen Minusanschluss der Halbbrücke mit zwei Spannungsniveaus. Der Schaltspannungsanschluss der Halbbrücke mit zwei Spannungsniveaus ist mit der Anode der antiparallelen Diode des ersten Leistungsschalters der Halbbrücke mit zwei Spannungsniveaus verbunden, der Plusanschluss der Halbbrücke mit zwei Spannungsniveaus mit der Kathode der antiparallelen Diode des ersten Leistungsschalters der Halbbrücke mit zwei Spannungsniveaus und der Minusanschluss der Halbbrücke mit zwei Spannungsniveaus mit der Anode der antiparallelen Diode des zweiten Leistungsschalters der Halbbrücke mit zwei Spannungsniveaus. Der Mittelpunktspannungsanschluss kommt in der Ausführungsform der Halbbrücke mit zwei Spannungsniveaus nicht zur Anwendung. Diese Ausführungsform ist nicht Erfindungsgemäß.

**Eine Ausführungsform einer FCM (Flying Capacitor Multilevel) Halbbrücke (****Fig. 4****)** weist vier Leistungsschalter 41 und einen Kondensator 42 auf. Die vier Leistungsschalter jeder FCM Halbbrücke werden folgendermassen verschaltet:
- die Anode der antiparallelen Diode des ersten Leistungsschalters der FCM Halbbrücke ist mit der Kathode der antiparallelen Diode des zweiten Leistungsschalters der FCM Halbbrücke verbunden,
- die Anode der antiparallelen Diode des zweiten Leistungsschalters der FCM Halbbrücke ist mit der Kathode der antiparallelen Diode des dritten Leistungsschalters der FCM Halbbrücke verbunden,
- die Anode der antiparallelen Diode des dritten Leistungsschalters der FCM Halbbrücke ist mit der Kathode der antiparallelen Diode des vierten Leistungsschalters der FCM Halbbrücke verbunden.

Der Kondensator der FCM Halbbrücke weist zwei Anschlüsse auf. Der erste Anschluss des Kondensators der FCM Halbbrücke ist mit der Anode des ersten Leistungsschalters der FCM Halbbrücke verbunden. Der zweite Anschluss des Kondensators der FCM Halbbrücke ist mit der Kathode des vierten Leistungsschalters der FCM Halbbrücke verbunden. Die FCM Halbbrücke weist drei Anschlüsse auf: einen Schaltspannungsanschluss der FCM Halbbrücke, einen Plusanschluss der FCM Halbbrücke und einen Minusanschluss der FCM Halbbrücke. Der Schaltspannungsanschluss der FCM Halbbrücke ist mit der Anode der antiparallelen Diode des zweiten Leistungsschalters der FCM Halbbrücke verbunden. Der Plusanschluss der FCM Halbbrücke ist mit der Kathode der antiparallelen Diode des ersten Leistungsschalters der FCM Halbbrücke verbunden. Der Minusanschluss der FCM Halbbrücke ist mit der Anode der antiparallelen Diode des vierten Leistungsschalters der FCM Halbbrücke verbunden. Der Mittelpunktspannungsanschluss kommt in der Ausführungsform der FCM Halbbrücke nicht zur Anwendung.

**Eine Ausführungsform einer aktiven T-Type Halbbrücke (****Fig. 5****)** weist vier Leistungsschalter 51 auf, welche folgendermassen verschaltet sind:
- die Anode der antiparallelen Diode des ersten Leistungsschalters der aktiven T-Type Halbbrücke ist mit der Kathode der antiparallelen Diode des zweiten Leistungsschalters der aktiven T-Type Halbbrücke verbunden,
- die Anode der antiparallelen Diode des zweiten Leistungsschalters der aktiven T-Type Halbbrücke ist mit der Anode der antiparallelen Diode des dritten Leistungsschalters der aktiven T-Type Halbbrücke verbunden,
- die Anode der antiparallelen Diode des ersten Leistungsschalters der aktiven T-Type Halbbrücke ist mit der Kathode der antiparallelen Diode des vierten Leistungsschalters der aktiven T-Type Halbbrücke verbunden.

Die aktive T-Type Halbbrücke weist vier Anschlüsse auf:
- einen Schaltspannungsanschluss der aktiven T-Type Halbbrücke,
- einen Plusanschluss der aktiven T-Type Halbbrücke,
- einen Mittelpunktspannungsanschluss der aktiven T-Type Halbbrücke und
- einen Minusanschluss der aktiven T-Type Halbbrücke.

Der Schaltspannungsanschluss der aktiven T-Type Halbbrücke ist mit der Anode der antiparallelen Diode des ersten Leistungsschalters der aktiven T-Type Halbbrücke verbunden. Der Plusanschluss der aktiven T-Type Halbbrücke ist mit der Kathode der antiparallelen Diode des ersten Leistungsschalters der aktiven T-Type Halbbrücke verbunden. Der Mittelpunktspannungsanschluss der aktiven T-Type Halbbrücke ist mit der Kathode der antiparallelen Diode des dritten Leistungsschalters der aktiven T-Type Halbbrücke verbunden. Der Minusanschluss der aktiven T-Type Halbbrücke ist mit der Anode der antiparallelen Diode des vierten Leistungsschalters der aktiven T-Type Halbbrücke verbunden.

**Eine Ausführungsform einer passiven T-Type Halbbrücke (****Fig. 6****)** weist zwei Dioden 62 und zwei Leistungsschalter 61 auf, welche folgendermassen verschaltet sind:
- die Anode der ersten Diode der passiven T-Type Halbbrücke ist mit der Kathode der antiparallelen Diode des ersten Leistungsschalters der passiven T-Type Halbbrücke verbunden,
- die Anode der antiparallelen Diode des ersten Leistungsschalters der passiven T-Type Halbbrücke ist mit der Anode der antiparallelen Diode des zweiten Leistungsschalters der passiven T-Type Halbbrücke verbunden,
- die Anode der ersten Diode der passiven T-Type Halbbrücke ist mit der Kathode der zweiten Diode der passiven T-Type Halbbrücke verbunden.

Die passive T-Type Halbbrücke weist vier Anschlüsse auf:
- einen Schaltspannungsanschluss der passiven T-Type Halbbrücke,
- einen Plusanschluss der passiven T- passiven Halbbrücke,
- einen Mittelpunktspannungsanschluss der passiven T-Type Halbbrücke und
- einen Minusanschluss der passiven T-Type Halbbrücke.

Der Schaltspannungsanschluss der passiven T-Type Halbbrücke ist mit der Anode der ersten Diode der passiven T-Type Halbbrücke verbunden. Der Plusanschluss der passiven T-Type Halbbrücke ist mit der Kathode der ersten Diode der passiven T-Type Halbbrücke verbunden. Der Mittelpunktspannungsanschluss der passiven T-Type Halbbrücke ist mit der Kathode der antiparallelen Diode des zweiten Leistungsschalters der passiven T-Type Halbbrücke verbunden. Der Minusanschluss der passiven T-Type Halbbrücke ist mit der Anode der zweiten Diode der passiven T-Type Halbbrücke verbunden.

**Eine Ausführungsform einer NPC (Neutral-Point Clamped) Halbbrücke (****Fig. 6a****)** weist vier Leistungsschalter 63 und zwei Dioden 64 auf, welche folgendermassen verschaltet sind:
- die Anode der antiparallelen Diode des ersten Leistungsschalters der NPC Halbbrücke ist mit der Kathode der antiparallelen Diode des zweiten Leistungsschalters der NPC Halbbrücke und der Kathode der ersten Diode verbunden,
- die Anode der antiparallelen Diode des zweiten Leistungsschalters der NPC Halbbrücke ist mit der Kathode der antiparallelen Diode des dritten Leistungsschalters der NPC Halbbrücke verbunden,
- die Anode der antiparallelen Diode des dritten Leistungsschalters der NPC Halbbrücke ist mit der Anode der zweiten Diode und der Kathode der antiparallelen Diode des vierten Leistungsschalters der NPC Halbbrücke verbunden,
- die Anode der ersten Diode der NPC Halbbrücke ist mit der Kathode der zweiten Diode der NPC Halbbrücke verbunden.

Die NPC Halbbrücke weist vier Anschlüsse auf:
- einen Schaltspannungsanschluss der NPC Halbbrücke,
- einen Plusanschluss der NPC Halbbrücke,
- einen Mittelpunktspannungsanschluss der NPC Halbbrücke und
- einen Minusanschluss der NPC Halbbrücke.

Der Schaltspannungsanschluss der NPC Halbbrücke ist mit der Anode der antiparallelen Diode des zweiten Leistungsschalters der NPC Halbbrücke verbunden. Der Plusanschluss der NPC Halbbrücke ist mit der Kathode der antiparallelen Diode des ersten Leistungsschalters der NPC Halbbrücke verbunden. Der Mittelpunktspannungsanschluss der NPC Halbbrücke ist mit der Anode der ersten Diode der NPC Halbbrücke verbunden. Der Minusanschluss der NPC Halbbrücke ist mit der Anode der antiparallelen Diode des vierten Leistungsschalters der NPC Halbbrücke verbunden.

### Beispiele für Ausführungsformen der Wechselspannungsfilterstufen:

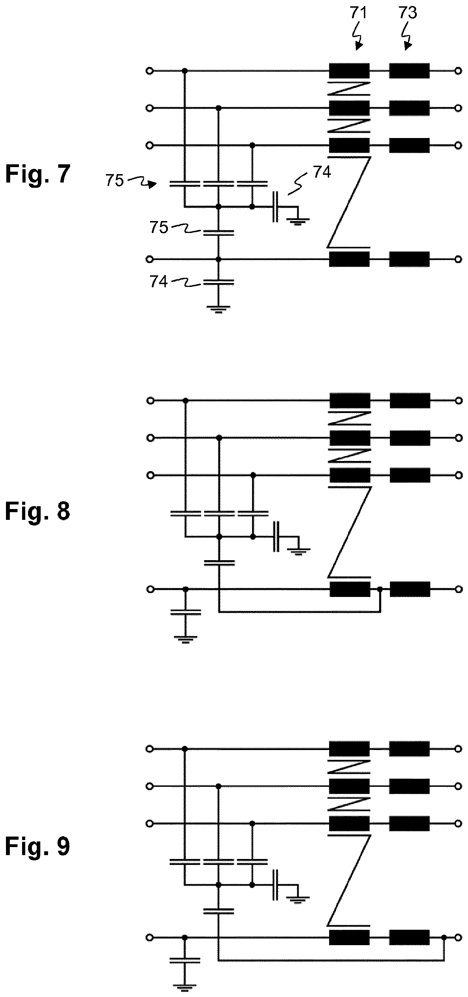

**Eine erste Ausführungsform der Wechselspannungsfilterstufe (****Fig. 7****)** weist folgende Komponenten auf:
- eine (*m*+1)-phasige Gleichtaktfilterdrossel 71, aufweisend *m*+1 Wicklungen, jeweils aufweisend zwei Anschlüsse,
- *m*+1 Filterspulen 73, jeweils aufweisend zwei Anschlüsse,
- 2 Gleichtaktfilterkondensatoren 74, jeweils aufweisend zwei Anschlüsse, und
- *m*+1 Filterkondensatoren 75, jeweils aufweisend zwei Anschlüsse.

Für 1 ≤ *k* ≤ *m* gelten folgende Verbindungen:
- der *k*-te Eingangsanschluss der ersten Ausführungsform der Wechselspannungsfilterstufe mit dem ersten Anschluss des *k*-ten Filterkondensators,
- der erste Anschluss des *k*-ten Filterkondensators mit dem ersten Anschluss der *k*-ten Wicklung der (*m*+1)-phasigen Gleichtaktfilterdrossel,
- der zweite Anschluss der *k*-ten Wicklung der (*m*+1)-phasigen Gleichtaktfilterdrossel mit dem ersten Anschluss der *k*-ten Filterspule,
- der zweite Anschluss der *k*-ten Filterspule mit dem *k*-ten Ausgangsanschluss der ersten Ausführungsform der Wechselspannungsfilterstufe.

Der (*m*+1)-te Eingangsanschluss der ersten Ausführungsform der Wechselspannungsfilterstufe ist mit dem ersten Anschluss der (*m*+1)-ten Wicklung der (*m*+1)-phasigen Gleichtaktfilterdrossel, dem ersten Anschluss des (*m*+1)-ten Filterkondensators und dem ersten Anschluss des zweiten Gleichtaktfilterkondensators verbunden. Die zweiten Anschlüsse aller *m*+1 Filterkondensatoren sind mit dem ersten Anschluss des ersten Gleichtaktfilterkondensators verbunden. Der zweite Anschluss der (*m*+1)-ten Wicklung der (*m*+1)-phasigen Gleichtaktfilterdrossel ist mit dem ersten Anschluss der (*m*+1)-ten Filterspule verbunden. Der zweite Anschluss der (*m*+1)-ten Filterspule ist mit dem (*m*+1)-ten Ausgangsanschluss der ersten Ausführungsform der Wechselspannungsfilterstufe verbunden. Die zweiten Anschlüsse der zwei Gleichtaktfilterkondensatoren sind mit dem Erdungsanschluss der ersten Ausführungsform der Wechselspannungsfilterstufe verbunden.

Aus praktischen Gründen kann es sinnvoll sein, die Reihenfolge der (*m*+1)-phasigen Gleichtaktfilterdrossel und der *m*+1 Filterspulen der beschriebenen Serienschaltung zu vertauschen. Die *m*+1 Filterspulen können magnetisch gekoppelt sein, z.B. im Sinne einer Gleich- oder Gegentaktdrossel.

Je nach Realisierung können einzelne oder mehrere Komponenten entfallen:
- die (*m*+1)-phasige Gleichtaktfilterdrossel 71 kann entfallen, d.h. für 1 ≤ *k* ≤ *m+1* gilt, dass der erste Anschluss der *k*-ten Wicklung der (*m*+1)-phasige Gleichtaktfilterdrossel mit dem zweiten Anschluss der *k*-ten Wicklung der (*m*+1)-phasige Gleichtaktfilterdrossel verbunden wird,
- einzelne oder alle Filterspulen 73 können entfallen, d.h. bei der betreffenden Filterspule bzw. den betreffenden Filterspulen wird der erste Anschluss der Filterspule mit dem zweiten Anschluss der Filterspule verbunden,
- einzelne oder alle Filterkondensatoren 75 können aus der Schaltung entfernt werden,
- einer der *m*+1 Filterkondensatoren 75 kann durch einen Kurzschluss ersetzt werden,
- der erste Gleichtaktfilterkondensator 74 kann entweder aus der Schaltung entfernt oder durch einen Kurzschluss ersetzt werden,
- der zweite Gleichtaktfilterkondensator 74 kann aus der Schaltung entfernt werden,
- Kombinationen daraus, z.B. können alle Filterspulen entfallen und der erste Gleichtaktfilterkondensator aus der Schaltung entfernt werden.

**Eine zweite Ausführungsform der Wechselspannungsfilterstufe (****Fig. 8****)** weist dieselben Komponenten wie die erste Ausführungsform der Wechselspannungsfilterstufe und auch dieselben Verbindungen zwischen den Komponenten auf, bis auf einen Unterschied: der erste Anschluss des (*m*+1)-ten Filterkondensators der zweiten Ausführungsform der Wechselspannungsfilterstufe ist nicht mit dem (*m*+1)-ten Eingangsanschluss der zweiten Ausführungsform der Wechselspannungsfilterstufe sondern mit dem zweiten Anschluss der (*m*+1)-ten Wicklung der (*m*+1)-phasigen Gleichtaktfilterdrossel der zweiten Ausführungsform der Wechselspannungsfilterstufe verbunden.

**Eine dritte Ausführungsform der Wechselspannungsfilterstufe (****Fig. 9****)** weist dieselben Komponenten wie die erste Ausführungsform der Wechselspannungsfilterstufe und auch dieselben Verbindungen zwischen den Komponenten auf, bis auf einen Unterschied: der erste Anschluss des (*m*+1)-ten Filterkondensators der dritten Ausführungsform der Wechselspannungsfilterstufe ist nicht mit dem (*m*+1)-ten Eingangsanschluss der dritten Ausführungsform der Wechselspannungsfilterstufe sondern mit dem (*m*+1)-ten Ausgangsanschluss der dritten Ausführungsform der Wechselspannungsfilterstufe verbunden.

### Beispiele für Ausführungsformen der Gleichspannungsblöcke:

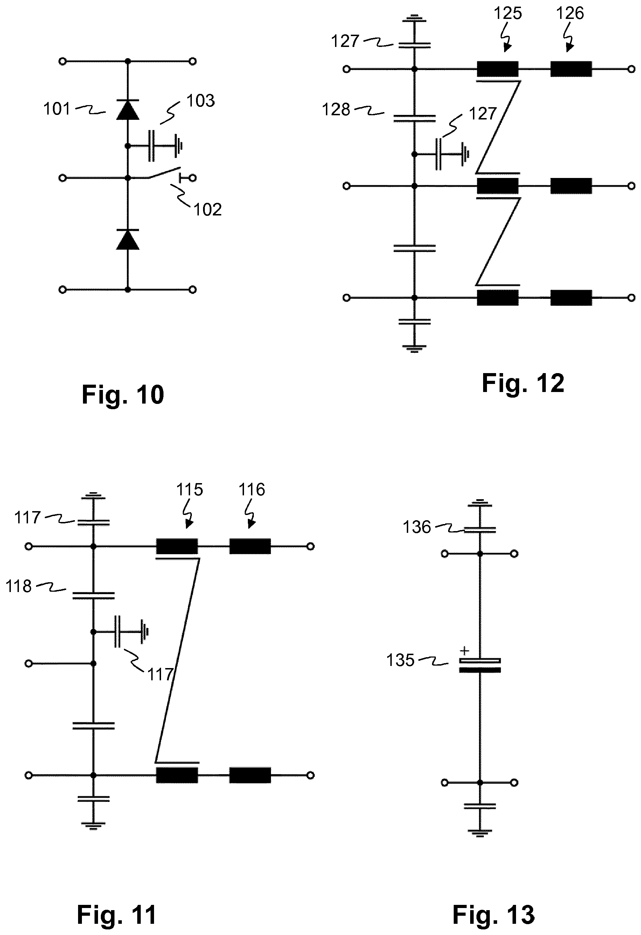

**Eine Ausführungsform des Umschaltblocks (****Fig. 10****)** weist folgende Komponenten auf:
- zwei Dioden 101,
- einen Schalter 102 (z.B. der Schalter eines herkömmlichen Relais) aufweisend zwei Anschlüsse und
- einen Gleichtaktfilterkondensator 103 aufweisend zwei Anschlüsse.

Der Schalter des Umschaltblocks kann die Zustände 'eingeschaltet' oder 'ausgeschaltet' annehmen. Im Zustand 'eingeschaltet' stellt der Schalter des Umschaltblocks eine elektrische Verbindung zwischen den zwei Anschlüssen des Schalters des Umschaltblocks her. Im Zustand 'ausgeschaltet' ist die elektrische Verbindung zwischen den zwei Anschlüssen des Schalters des Umschaltblocks getrennt.

Die Anode der ersten Diode des Umschaltblocks ist mit der Kathode der zweiten Diode des Umschaltblocks, dem ersten Anschluss des Schalters des Umschaltblocks, dem ersten Anschluss des Gleichtaktfilterkondensators des Umschaltblocks und dem Mittelpunktspannungsanschluss des Eingangsklemmblocks des Umschaltblocks verbunden. Die Kathode der ersten Diode des Umschaltblocks ist mit dem Plusanschluss des Eingangsklemmblocks des Umschaltblocks und dem Plusanschluss des Ausgangsklemmblocks des Umschaltblocks verbunden. Die Anode der zweiten Diode des Umschaltblocks ist mit dem Minusanschluss des Eingangsklemmblocks des Umschaltblocks und dem Minusanschluss des Ausgangsklemmblocks des Umschaltblocks verbunden. Der zweite Anschluss des Schalters des Umschaltblocks ist mit dem Mittelpunktspannungsanschluss des Ausgangsklemmblocks des Umschaltblocks verbunden und der zweite Anschluss des Gleichtaktfilterkondensators ist mit dem Erdungsanschluss des Ausgangsklemmblocks verbunden.

In einer alternativen Realisierung des Umschaltblocks liegt der Gleichtaktfilterkondensator nicht vor.

**Eine erste Ausführungsform des Gleichspannungsfilterblocks (****Fig. 11****)** weist folgende Komponenten auf:
- eine zweiphasige Gleichtaktfilterdrossel 115, aufweisend zwei Wicklungen, jeweils aufweisend zwei Anschlüsse,
- zwei Filterspulen 116, jeweils aufweisend zwei Anschlüsse,
- drei Gleichtaktfilterkondensatoren 117, jeweils aufweisend zwei Anschlüsse, und
- zwei Filterkondensatoren 118, jeweils aufweisend zwei Anschlüsse.

Die erste Ausführungsform des Gleichspannungsfilterblocks realisiert folgende Verbindungen:
- Der Plusanschluss der Eingangsklemme der ersten Ausführungsform des Gleichspannungsfilterblocks ist mit dem ersten Anschluss des ersten Gleichtaktfilterkondensators, dem ersten Anschluss des ersten Filterkondensators und dem ersten Anschluss der ersten Wicklung der zweiphasigen Gleichtaktfilterdrossel verbunden.
- Der Mittelpunktspannungsanschluss der Eingangsklemme der ersten Ausführungsform des Gleichspannungsfilterblocks ist mit dem ersten Anschluss des zweiten Gleichtaktfilterkondensators, dem zweiten Anschluss des ersten Filterkondensators und dem zweiten Anschluss des zweiten Filterkondensators verbunden.

- Der Minusanschluss der Eingangsklemme der ersten Ausführungsform des Gleichspannungsfilterblocks ist mit dem ersten Anschluss des dritten Gleichtaktfilterkondensators, dem ersten Anschluss des zweiten Filterkondensators und dem ersten Anschluss der zweiten Wicklung der zweiphasigen Gleichtaktfilterdrossel verbunden.
- Der zweite Anschluss der ersten Wicklung der zweiphasigen Gleichtaktfilterdrossel ist mit dem ersten Anschluss der ersten Filterspule verbunden.
- Der zweite Anschluss der zweiten Wicklung der zweiphasigen Gleichtaktfilterdrossel ist mit dem ersten Anschluss der zweiten Filterspule verbunden.
- Der zweite Anschluss der ersten Filterspule ist mit dem Plusanschluss der Ausgangsklemme der ersten Ausführungsform des Gleichspannungsfilterblocks verbunden.
- Der zweite Anschluss der zweiten Filterspule ist mit dem Minusanschluss der Ausgangsklemme der ersten Ausführungsform des Gleichspannungsfilterblocks verbunden.
- Die zweiten Anschlüsse aller Gleichtaktfilterkondensatoren sind miteinander verbunden und bilden den Erdungsanschluss der ersten Ausführungsform des Gleichspannungsfilterblocks.
- Der Mittelpunktspannungsanschluss der Ausgangsklemme der ersten Ausführungsform des Gleichspannungsfilterblocks entfällt.

Eine weitere Variante dieses Gleichspannungsfilterblocks liegt vor, wenn die beschriebenen Serienschaltungen von Filterspulen und Wicklungen der zweiphasigen Gleichtaktfilterdrossel vertauscht werden.

Je nach Realisierung können einzelne oder mehrere Komponenten entfallen:
- die zweiphasige Gleichtaktfilterdrossel kann entfallen, d.h. für 1 ≤ *k* ≤ 2 gilt, dass der erste Anschluss der *k*-ten Wicklung mit dem zweiten Anschluss der *k-*ten Wicklung verbunden wird,
- einzelne oder alle Filterspulen können entfallen, d.h. bei der betreffenden Filterspule bzw. den betreffenden Filterspulen wird der erste Anschluss der Filterspule mit dem zweiten Anschluss der Filterspule verbunden,
- einzelne, mehrere oder alle Gleichtaktfilterkondensatoren können entfallen, d.h. der betreffende Gleichtaktfilterkondensator bzw. die betreffenden Gleichtaktfilterkondensatoren werden aus der Schaltung entfernt,
- Kombinationen daraus, z.B. können alle Filterspulen und alle Gleichtaktfilterkondensatoren entfallen.

**Eine zweite Ausführungsform des Gleichspannungsfilterblocks (****Fig. 12****)** weist folgende Komponenten auf:
- eine dreiphasige Gleichtaktfilterdrossel 125, aufweisend drei Wicklungen, jeweils aufweisend zwei Anschlüsse,
- drei Filterspulen 126, jeweils aufweisend zwei Anschlüsse,
- drei Gleichtaktfilterkondensatoren 127, jeweils aufweisend zwei Anschlüsse, und
- zwei Filterkondensatoren 128, jeweils aufweisend zwei Anschlüsse.

Die zweite Ausführungsform des Gleichspannungsfilterblocks realisiert folgende Verbindungen:
- Der Plusanschluss der Eingangsklemme der zweiten Ausführungsform des Gleichspannungsfilterblocks ist mit dem ersten Anschluss des ersten Gleichtaktfilterkondensators, dem ersten Anschluss des ersten Filterkondensators und dem ersten Anschluss der ersten Wicklung der dreiphasigen Gleichtaktfilterdrossel verbunden.
- Der Mittelpunktspannungsanschluss der Eingangsklemme der zweiten Ausführungsform des Gleichspannungsfilterblocks ist mit dem ersten Anschluss des zweiten Gleichtaktfilterkondensators, dem zweiten Anschluss des ersten Filterkondensators, dem zweiten Anschluss des zweiten Filterkondensators und dem ersten Anschluss der zweiten Wicklung der dreiphasigen Gleichtaktfilterdrossel verbunden.
- Der Minusanschluss der Eingangsklemme der zweiten Ausführungsform des Gleichspannungsfilterblocks ist mit dem ersten Anschluss des dritten Gleichtaktfilterkondensators, dem ersten Anschluss des zweiten Filterkondensators und dem ersten Anschluss der dritten Wicklung der dreiphasigen Gleichtaktfilterdrossel verbunden.
- Der zweite Anschluss der ersten Wicklung der dreiphasigen Gleichtaktfilterdrossel ist mit dem ersten Anschluss der ersten Filterspule verbunden.
- Der zweite Anschluss der zweiten Wicklung der dreiphasigen Gleichtaktfilterdrossel ist mit dem ersten Anschluss der zweiten Filterspule verbunden.
- Der zweite Anschluss der dritten Wicklung der dreiphasigen Gleichtaktfilterdrossel ist mit dem ersten Anschluss der dritten Filterspule verbunden.
- Der zweite Anschluss der ersten Filterspule ist mit dem Plusanschluss der Ausgangsklemme der zweiten Ausführungsform des Gleichspannungsfilterblocks verbunden.
- Der zweite Anschluss der zweiten Filterspule ist mit dem Mittelpunktspannungsanschluss der Ausgangsklemme der zweiten Ausführungsform des Gleichspannungsfilterblocks verbunden.
- Der zweite Anschluss der dritten Filterspule ist mit dem Minusanschluss der Ausgangsklemme der zweiten Ausführungsform des Gleichspannungsfilterblocks verbunden.
- Die zweiten Anschlüsse aller Gleichtaktfilterkondensatoren sind miteinander verbunden und bilden den Erdungsanschluss der zweiten Ausführungsform des Gleichspannungsfilterblocks.

Eine weitere Variante dieses Gleichspannungsfilterblocks liegt vor, wenn die Serienschaltungen von Filterspulen und Wicklungen der dreiphasigen Gleichtaktfilterdrossel vertauscht werden..

Je nach Realisierung können einzelne oder mehrere Komponenten entfallen:
- die dreiphasigen Gleichtaktfilterdrossel kann entfallen, d.h. für 1 ≤ *k* ≤ 3 gilt, dass der erste Anschluss der *k*-ten Wicklung mit dem zweiten Anschluss der *k*-ten Wicklung verbunden wird,
- einzelne oder alle Filterspulen können entfallen, d.h. bei der betreffenden Filterspule bzw. den betreffenden Filterspulen wird der erste Anschluss der Filterspule mit dem zweiten Anschluss der Filterspule verbunden,
- einzelne, mehrere oder alle Gleichtaktfilterkondensatoren können entfallen, d.h. der betreffende Gleichtaktfilterkondensator bzw. die betreffenden Gleichtaktfilterkondensatoren werden aus der Schaltung entfernt,
- Kombinationen daraus, z.B. können alle Filterspulen und alle Gleichtaktfilterkondensatoren entfallen.

**Eine dritte Ausführungsform des Gleichspannungsfilterblocks (****Fig. 13****)** weist einen Kondensator 135, aufweisend zwei Anschlüsse, und zwei Gleichtaktfilterkondensatoren 136, jeweils aufweisend zwei Anschlüsse, auf. Der erste Anschluss des Kondensators ist mit den Plusanschlüssen der Ein- und Ausgangsklemmen der dritten Ausführungsform des Gleichspannungsfilterblocks verbunden. Der zweite Anschluss des Kondensators ist mit den Minusanschlüssen der Ein- und Ausgangsklemmen der dritten Ausführungsform des Gleichspannungsfilterblocks verbunden. Der erste Anschluss des ersten Gleichtaktfilterkondensators ist mit den Plusanschlüssen der Ein- und Ausgangsklemmen der dritten Ausführungsform des Gleichspannungsfilterblocks verbunden. Der erste Anschluss des zweiten Gleichtaktfilterkondensators ist mit den Minusanschlüssen der Ein- und Ausgangsklemmen der dritten Ausführungsform des Gleichspannungsfilterblocks verbunden. Die zweiten Anschlüsse der zwei Gleichtaktfilterkondensatoren sind miteinander verbunden und bilden den Erdungsanschluss der dritten Ausführungsform des Gleichspannungsfilterblocks. Die Mittelpunktspannungsanschlüsse der Ein- und Ausgangsklemmen der dritten Ausführungsform des Gleichspannungsfilterblocks entfallen.

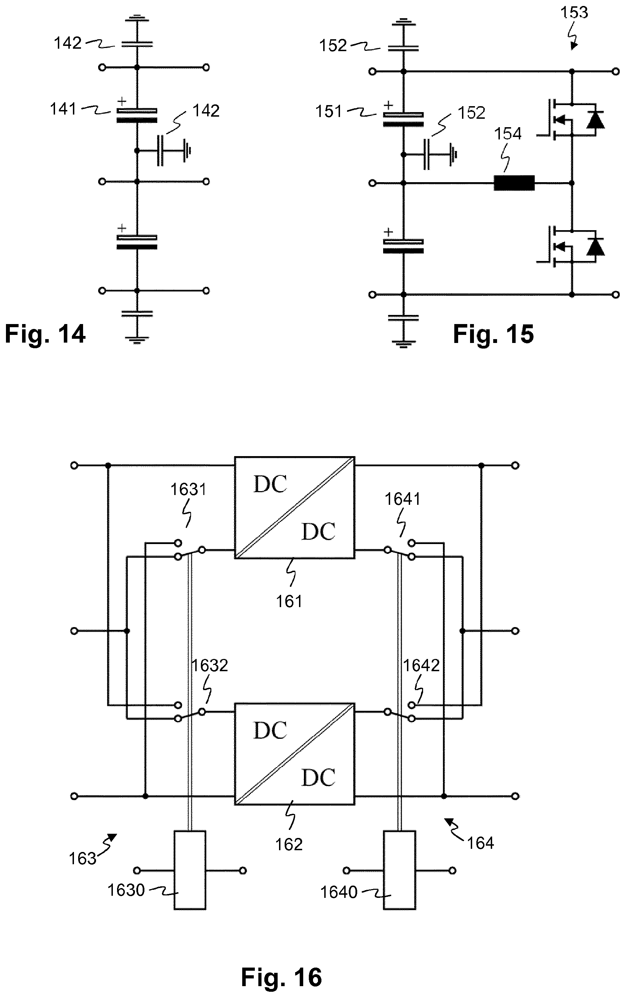

**Eine vierte Ausführungsform des Gleichspannungsfilterblocks (****Fig. 14****)** weist zwei Kondensatoren 141, aufweisend zwei Anschlüsse, und drei Gleichtaktfilterkondensatoren 142, jeweils aufweisend zwei Anschlüsse, auf. Der erste Anschluss des ersten Kondensators ist mit den Plusanschlüssen der Ein- und Ausgangsklemmen der vierten Ausführungsform des Gleichspannungsfilterblocks verbunden. Der zweite Anschluss des ersten Kondensators ist mit dem ersten Anschluss des zweiten Kondensators und den Mittelpunktspannungsanschlüssen der Ein- und Ausgangsklemmen der vierten Ausführungsform des Gleichspannungsfilterblocks verbunden. Der zweite Anschluss des zweiten Kondensators ist mit den Minusanschlüssen der Ein- und Ausgangsklemmen der vierten Ausführungsform des Gleichspannungsfilterblocks verbunden. Der erste Anschluss des ersten Gleichtaktfilterkondensators ist mit den Plusanschlüssen der Ein- und Ausgangsklemmen der vierten Ausführungsform des Gleichspannungsfilterblocks verbunden. Der erste Anschluss des zweiten Gleichtaktfilterkondensators ist mit den Mittelpunktspannungsanschlüssen der Ein- und Ausgangsklemmen der vierten Ausführungsform des Gleichspannungsfilterblocks verbunden. Der erste Anschluss des dritten Gleichtaktfilterkondensators ist mit den Minusanschlüssen der Ein- und Ausgangsklemmen der vierten Ausführungsform des Gleichspannungsfilterblocks verbunden. Die zweiten Anschlüsse der drei Gleichtaktfilterkondensatoren sind miteinander verbunden und bilden den Erdungsanschluss der vierten Ausführungsform des Gleichspannungsfilterblocks.

**Ein Gleichspannungsfilterblock mit aktiver Spannungssymmetrierung (****Fig. 15****)** weist folgende Komponenten auf:
- zwei Kondensatoren 151, jeweils aufweisend zwei Anschlüsse,
- drei Gleichtaktfilterkondensatoren 152, jeweils aufweisend zwei Anschlüsse,
- eine Halbbrücke 153 mit zwei Spannungsniveaus, aufweisend einen Plusanschluss, einen Schaltspannungsanschluss und einen Minusanschluss, und
- eine Filterspule 154, aufweisend zwei Anschlüsse.

Der erste Anschluss des ersten Kondensators ist mit dem Plusanschluss der Halbbrücke mit zwei Spannungsniveaus und den Plusanschlüssen der Ein- und Ausgangsklemmen des Gleichspannungsfilterblocks mit aktiver Spannungssymmetrierung verbunden. Der zweite Anschluss des ersten Kondensators ist mit dem ersten Anschluss des zweiten Kondensators, dem ersten Anschluss der Filterspule und dem Mittelpunktspannungsanschluss der Eingangsklemmen des Gleichspannungsfilterblocks mit aktiver Spannungssymmetrierung verbunden. Der zweite Anschluss des zweiten Kondensators ist mit dem Minusanschluss der Halbbrücke mit zwei Spannungsniveaus und den Minusanschlüssen der Ein- und Ausgangsklemmen des Gleichspannungsfilterblocks mit aktiver Spannungssymmetrierung verbunden. Der zweite Anschluss der Filterspule ist mit dem Schaltspannungsanschluss der Halbbrücke mit zwei Spannungsniveaus verbunden. Der erste Anschluss des ersten Gleichtaktfilterkondensators ist mit den Plusanschlüssen der Ein- und Ausgangsklemmen des Gleichspannungsfilterblocks mit aktiver Spannungssymmetrierung verbunden. Der erste Anschluss des zweiten Gleichtaktfilterkondensators ist mit dem Mittelpunktspannungsanschluss der Eingangsklemme des Gleichspannungsfilterblocks mit aktiver Spannungssymmetrierung verbunden. Der erste Anschluss des dritten Gleichtaktfilterkondensators ist mit den Minusanschlüssen der Ein- und Ausgangsklemmen des Gleichspannungsfilterblocks mit aktiver Spannungssymmetrierung verbunden. Die zweiten Anschlüsse der drei Gleichtaktfilterkondensatoren sind miteinander verbunden und bilden den Erdungsanschluss des Gleichspannungsfilterblocks mit aktiver Spannungssymmetrierung. Der Mittelpunktspannungsanschluss der Ausgangsklemme des Gleichspannungsfilterblocks mit aktiver Spannungssymmetrierung entfällt.

### Beispiele für Ausführungsformen des Gleichspannungswandlerblocks

**Eine erste Ausführungsform des Gleichspannungswandlers (****Fig. 16****)** weist folgende Komponenten auf:
- zwei Gleichspannungskonverter 161, 162, jeweils aufweisend einen Eingangsklemmblock, aufweisend einen Plusanschluss und einen Minusanschluss, und einen Ausgangsklemmblock, aufweisend einen Plusanschluss und einen Minusanschluss,
- ein eingangsseitiges Relais 163, aufweisend eine Steuerspule 1630, aufweisend zwei Steueranschlüsse, und zwei Umschalter 1631, 1632, jeweils aufweisend einen Umschaltanschluss und zwei Schalteranschlüsse, und
- ein ausgangsseitiges Relais 164, aufweisend eine Steuerspule 1640 und zwei Umschalter 1641, 1642, jeweils aufweisend einen Umschaltanschluss und zwei Schalteranschlüsse.

Jeder Umschalter 1631, 1632, 1641, 1642 kann zwei Zustände aufweisen. Im ersten Zustand ist der Umschaltanschluss des Umschalters mit dem ersten Schalteranschluss des Umschalters verbunden und der zweite Schalteranschluss des Umschalters ist nicht verbunden. Im zweiten Zustand ist der Umschaltanschluss des Umschalters mit dem zweiten Schalteranschluss des Umschalters verbunden und der erste Schalteranschluss des Umschalters ist nicht verbunden.

Jedes Relais 163, 164 kann zwei Zustände aufweisen. Im ersten Zustand des Relais befinden sich beide Umschalter des Relais im ersten Zustand der Umschalter. Im zweiten Zustand des Relais befinden sich beide Umschalter des Relais im zweiten Zustand der Umschalter. Das Aktivieren eines gewünschten Zustands des Relais erfolgt durch geeignete Anpassung einer Steuerspannung des Relais, welche über den zwei Steueranschlüssen der Steuerspule des Relais anliegt.

Bei der ersten Ausführungsform des Gleichspannungswandlers gelten folgende Verbindungen:
- Der Plusanschluss des Eingangsklemmblocks des Gleichspannungswandlers ist mit dem Plusanschluss des Eingangsklemmblocks des ersten Gleichspannungskonverters und mit dem ersten Schalteranschluss des zweiten Umschalters des eingangsseitigen Relais 163 verbunden.
- Der Mittelpunktspannungsanschluss des Eingangsklemmblocks des Gleichspannungswandlers ist mit dem zweiten Schalteranschluss des ersten Umschalters 1631 des eingangsseitigen Relais 163 und mit dem zweiten Schalteranschluss des zweiten Umschalters 1632 des eingangsseitigen Relais verbunden.
- Der Minusanschluss des Eingangsklemmblocks des Gleichspannungswandlers ist mit dem Minusanschluss des Eingangsklemmblocks des zweiten Gleichspannungskonverters und mit dem ersten Schalteranschluss des ersten Umschalters 1631 des eingangsseitigen Relais verbunden.
- Der Umschaltanschluss des ersten Umschalters 1631 des eingangsseitigen Relais ist mit dem Minusanschluss des Eingangsklemmblocks des ersten Gleichspannungskonverters verbunden. 1631 des eingangsseitigen Relais 163 und mit dem zweiten Schalteranschluss des zweiten Umschalters 1632 des eingangsseitigen Relais verbunden.
- Der Minusanschluss des Eingangsklemmblocks des Gleichspannungswandlers ist mit dem Minusanschluss des Eingangsklemmblocks des zweiten Gleichspannungskonverters und mit dem ersten Schalteranschluss des ersten Umschalters 1631 des eingangsseitigen Relais verbunden.
- Der Umschaltanschluss des ersten Umschalters 1631 des eingangsseitigen Relais ist mit dem Minusanschluss des Eingangsklemmblocks des ersten Gleichspannungskonverters verbunden.
- Der Umschaltanschluss des zweiten Umschalters 1632 des eingangsseitigen Relais ist mit dem Plusanschluss des Eingangsklemmblocks des zweiten Gleichspannungskonverters verbunden.
- Der Plusanschluss des Ausgangsklemmblocks des Gleichspannungswandlers ist mit dem Plusanschluss des Ausgangsklemmblocks des ersten Gleichspannungskonverters 161 und mit dem ersten Schalteranschluss des zweiten Umschalters 1642 des ausgangsseitigen Relais verbunden.
- Der Mittelpunktspannungsanschluss des Ausgangsklemmblocks des Gleichspannungswandlers ist mit dem zweiten Schalteranschluss des ersten Umschalters 1641 des ausgangsseitigen Relais und mit dem zweiten Schalteranschluss des zweiten Umschalters 1642 des ausgangsseitigen Relais verbunden.
- Der Minusanschluss des Ausgangsklemmblocks des Gleichspannungswandlers ist mit dem Minusanschluss des Ausgangsklemmblocks des zweiten Gleichspannungskonverters 162 und mit dem ersten Schalteranschluss des ersten Umschalters 1641 des ausgangsseitigen Relais verbunden.
- Der Umschaltanschluss des ersten Umschalters 1641 des ausgangsseitigen Relais ist mit dem Minusanschluss des Ausgangsklemmblocks des ersten Gleichspannungskonverters verbunden.
- Der Umschaltanschluss des zweiten Umschalters 1642 des ausgangsseitigen Relais ist mit dem Plusanschluss des Ausgangsklemmblocks des zweiten Gleichspannungskonverters verbunden.

Die beschriebene Schaltung ermöglicht alle Kombinationen aus ein- und ausgangsseitigen Parallel- oder Serienschaltungen der zwei Gleichspannungskonverter, wobei die Untervarianten mit ausgangsseitiger Serienschaltung nicht Erfindungsgemäß sind: einzig durch Umschalten der Relais erzielen: durch Umschalten des eingangsseitigen Relais vom ersten in den zweiten Zustand erfolgt eine Halbierung der Ausgangsspannung und durch Umschalten des ausgangsseitigen Relais vom ersten in den zweiten Zustand erfolgt eine Verdopplung der Ausgangsspannung. Dies kann für den Betrieb der universellen mehrphasigen Umrichtertopologie beispielsweise dann von technischem Vorteil sein, wenn anstelle des mehrphasigen Betriebs der einphasige Betrieb zum Einsatz kommt.

**Eine zweite Ausführungsform des Gleichspannungswandlers** resultiert, wenn die erste Ausführungsform des Gleichspannungswandlers ohne ausgangsseitiges Relais realisiert wird. Es bestehen hier die Untervarianten der ausgangsseitigen Serien- oder Parallelschaltung der zwei Gleichspannungskonverter. Durch Umschalten des eingangsseitigen Relais vom ersten in den zweiten Zustand resultiert eine Halbierung der Ausgangsspannung.

**Eine dritte Ausführungsform des Gleichspannungswandlers** resultiert, wenn die erste Ausführungsform des Gleichspannungswandlers ohne eingangsseitiges Relais realisiert wird. Es bestehen hier die Untervarianten der eingangsseitigen Serien- oder Parallelschaltung der zwei Gleichspannungskonverter. Durch Umschalten des ausgangsseitigen Relais vom ersten in den zweiten Zustand resultiert eine Verdopplung der Ausgangsspannung.

**Eine vierte Ausführungsform des Gleichspannungswandlers** resultiert, wenn die erste Ausführungsform des Gleichspannungswandlers ohne eingangsseitiges Relais und ohne ausgangsseitiges Relais realisiert wird. Es bestehen hier vier Untervarianten von ein- und ausgangsseitigen Serien- oder Parallelschaltungen der zwei Gleichspannungskonverter. Im Fall der ein- und ausgangsseitigen Parallelschaltungen der zwei Gleichspannungskonverter kann ein Gleichspannungskonverter aus der Schaltung entfernt werden.

**Eine Ausführungsform der (*m*+1)-phasigen Gleichtaktfilterdrossel** weist *m+1* Wicklungen 171, 172, 173, 174, 175, 176 auf, welche jeweils zwei Anschlüsse aufweisen. Für 1 ≤ *k* ≤ *m* gilt: die *k*-te Wicklung der (*m*+1)-phasigen Gleichtaktfilterdrossel dient der Gleichtaktfilterung der in der *k*-ten Phase der universellen mehrphasigen Umrichtertopologie vorliegenden Gleichtaktstörungen. Die (*m*+1)-te Wicklung der (*m*+1)-phasigen Gleichtaktfilterdrossel dient der zusätzlichen Gleichtaktfilterung bei einphasigem Betrieb der universellen mehrphasige Umrichtertopologie und verhindert, bei Verwendung eines Magnetkerns für die Realisierung der (*m*+1)-phasigen Gleichtaktdrossel, dass der einphasige Betrieb der universellen mehrphasige Umrichtertopologie zur Sättigung des Magnetkerns der (*m*+1)-phasigen Gleichtaktdrossel führt. Jede Wicklung kann entweder durch ein zusammenhängendes Wicklungspaket oder durch geeignete Serien- und/oder Parallelschaltungen mehrerer Wicklungspakete realisiert werden. Die einzelnen Wicklungspakete können geeignet geometrisch verteilt werden. Im Sinne einer technisch sinnvollen Realisierung weisen alle *m+1* Wicklungen der (*m*+1)-phasigen Gleichtaktfilterdrossel üblicherweise dieselbe Anzahl Windungen und dieselben Wicklungssinne auf. Im einphasigen Betrieb der universellen mehrphasigen Umrichtertopologie wird die (*m*+1)-te Wicklung der (*m*+1)-phasigen Gleichtaktfilterdrossel mit einem Strom belastet, welcher der Summe aller Ströme durch die ersten *m* Wicklungen der (*m*+1)-phasigen Gleichtaktfilterdrossel entspricht.

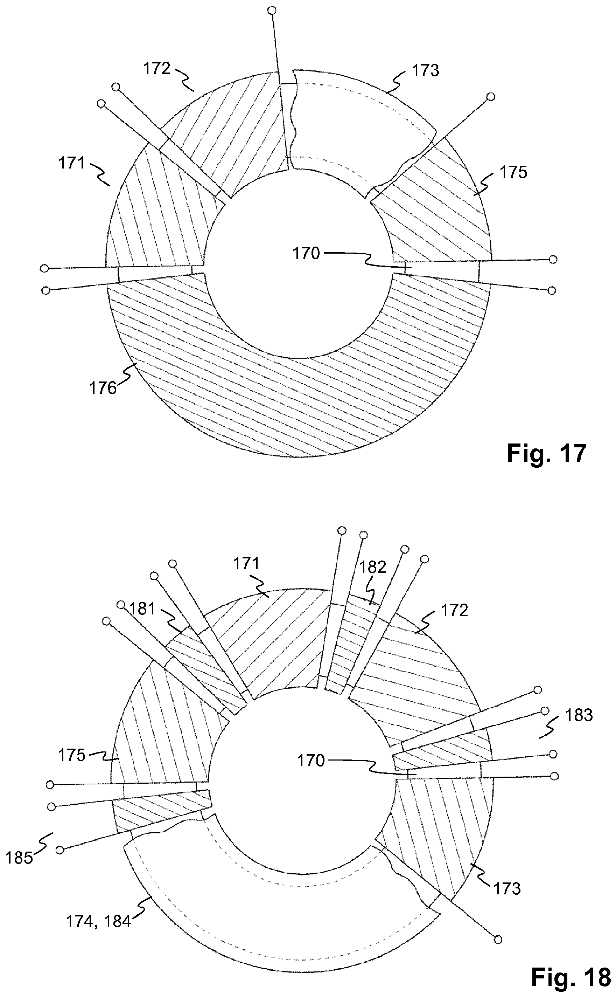

Unter Verwendung eines oder mehrerer magnetischer Kerne lassen sich erhöhte Induktivitätswerte zwischen den jeweiligen Anschlüssen jeder Wicklung der (*m*+1)-phasigen Gleichtaktfilterdrossel erreichen. Üblicherweise werden in der Praxis für diesen Zweck Ringkerne verwendet (Fig. 17 und 18), grundsätzlich können aber beliebige Kernformen verwendet werden, z.B. E-Kerne, U-Kerne, U-I-Kerne oder Planarkerne.

Eine erste mögliche Ausführungsform der (*m*+1)-phasigen Gleichtaktfilterdrossel ist in Fig. 17 dargestellt, mit einer ersten Wechselspannungswicklung 171, einer zweiten Wechselspannungswicklung 172, *m*-3 weiteren Wechselspannungswicklungen 173, einer *m*-ten Wechselspannungswicklung 175 und einer Rückleiterwicklung 176, auf einem gemeinsamen Magnetkern 170. Hier weisen die für die Realisierung der ersten *m* Wicklungen 171 - 175 benötigten Drähte dieselben Leiterquerschnitte A_{Cu,1} auf. Der für die (*m*+1)-te Wicklung 176 verwendete Draht weist den *m*-fachen effektiven Leiterquerschnitt auf (*A*_{Cu,m+1} = *m A*_{Cu,1})*.* In Fig. 17 wird die (*m*+1)-te Wicklung als zusammenhängendes Wicklungspaket realisiert.

Eine zweite mögliche Ausführungsform der (*m*+1)-phasigen Gleichtaktfilterdrossel ist in Fig. 18 dargestellt. Hier weisen die für die Realisierung der ersten *m* Wicklungen benötigten Drähte dieselben Leiterquerschnitte *A*_{Cu,1} auf. Der für die (*m*+1)-te Wicklung verwendete Draht weist den *m*-fachen effektiven Leiterquerschnitt auf (*A*_{Cu,m+1} = *m A*_{Cu,1})*.* Im Unterschied zu Fig. 17 wird in Fig. 18 die (*m*+1)-te Wicklung als verteiltes Wicklungspaket realisiert, aufweisend eine erste, zweite, dritte bis *m*-te Rückleiterwicklung 181, 182, 183, 185. Weitere Wechselspannungs- und Rückleiterwicklungen sind mit 174, 184 bezeichnet.

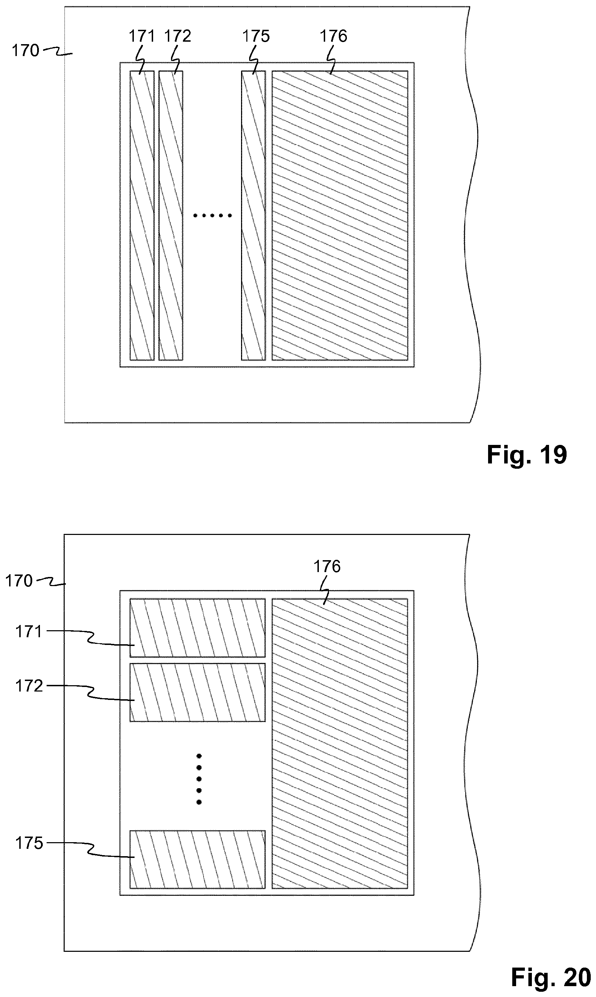

In Fig. 19 und Fig. 20 sind Querschnittszeichnungen möglicher Leiteranordnungen der *m+1* Wicklungen der (*m*+1)-phasigen Gleichtaktfilterdrossel im Kernfenster von E-Kernen, U-Kernen, U-I-Kernen oder Planarkernen dargestellt. Aufgrund des, im Sinne einer technisch sinnvollen Realisierung, erhöhten Leiterquerschnittbedarfs für die (*m*+1)-te Wicklung füllt die (*m+*1)-te Wicklung die erste Hälfte des für alle Wicklungen verfügbaren Kernfensters und die restlichen m Wicklungen teilen sich die zweite Hälfte des verfügbaren Kernfensters zu gleichen Teilen.

### Beispiele für Ausführungsformen der universellen mehrphasigen Umrichtertopologie

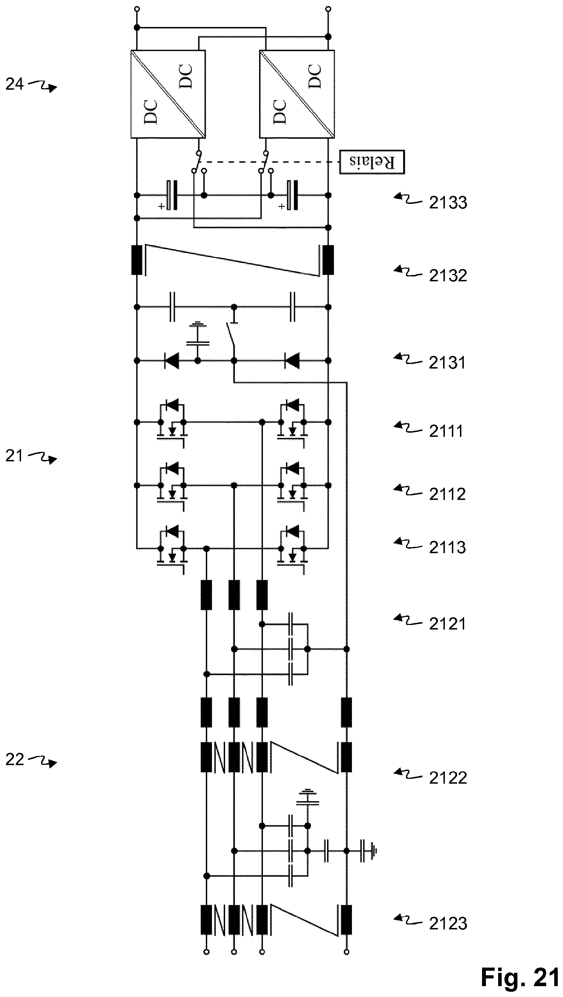

**Eine Ausführungsform des universellen dreiphasigen Umrichters mit zwei Spannungsniveaus (****Fig. 21****)** ist nicht erfindungsgemäß, und basiert auf der Ausführungsform der universellen mehrphasigen Umrichtertopologie mit Gleichspannungswandlerblock und weist *m* = 3 und folgende Baugruppen auf:
- jede der drei Halbbrücken 2111, 2112, 2113 des Leistungsteils 21 ist realisiert durch die in Fig. 3 dargestellte Ausführungsform der Halbbrücke mit zwei Spannungsniveaus,
- drei Wechselspannungsfilterstufen 22,
   ∘ die erste Wechselspannungsfilterstufe 2121 wird durch die erste Ausführungsform der Wechselspannungsfilterstufe aus Fig. 7 realisiert, mit folgenden Anpassungen: die vierphasige Gleichtaktfilterdrossel entfällt, die vierte Filterspule entfällt, der vierte Filterkondensator wird durch einen Kurzschluss ersetzt und die zwei Gleichtaktfilterkondensatoren werden aus der Schaltung entfernt,
   ∘ die zweite Wechselspannungsfilterstufe 2122 wird durch die erste Ausführungsform der Wechselspannungsfilterstufe aus Fig. 7 realisiert,
   ∘ die dritte Wechselspannungsfilterstufe 2123 wird durch die erste Ausführungsform der Wechselspannungsfilterstufe aus Fig. 7 realisiert, mit folgenden Anpassungen: alle vier Filterspulen entfallen, alle vier Filterkondensatoren werden aus der Schaltung entfernt und die zwei Gleichtaktfilterkondensatoren werden aus der Schaltung entfernt,
- drei Gleichspannungsblöcken:
   ∘ der erste Gleichspannungsblock 2131 wird durch die Ausführungsform des Umschaltblocks aus Fig. 10 realisiert,
   ∘ der zweite Gleichspannungsblock 2132 wird durch die erste Ausführungsform des Gleichspannungsfilterblocks aus Fig. 11 realisiert, mit folgenden Anpassungen: die zwei Filterspulen entfallen und die drei Gleichtaktfilterkondensatoren werden aus der Schaltung entfernt,
   ∘ der dritte Gleichspannungsblock 2133 wird durch die vierte Ausführungsform des Gleichspannungsfilterblocks aus Fig. 14 realisiert, mit folgender Anpassung: die drei Gleichtaktfilterkondensatoren werden aus der Schaltung entfernt,
- der Gleichspannungswandlerblock 24 wird durch die zweite Ausführungsform des Gleichspannungswandlers, mit ausgangsseitiger Parallelschaltung der zwei Gleichspannungskonverter, realisiert.

### Funktionsweise:

- Betrieb als konventioneller dreiphasiger Umrichter:
   ∘ die Leistungsschalter der drei Halbbrücken werden für den Betrieb als dreiphasiger Umrichter mit zwei Spannungsniveaus geeignet angesteuert; die Regelung, z.B. der Ausgangsspannung des Umrichters, erfolgt genau gleich wie beim konventionellen dreiphasigen Umrichter mit zwei Spannungsniveaus,
   ∘ Schalter des Umschaltblocks geschlossen,
   ∘ eingangsseitiges Relais des Gleichspannungswandlerblocks ist im zweiten Zustand.
- Betrieb als konventioneller einphasiger Umrichter:
   ∘ Schalter des Umschaltblocks geöffnet,
   ∘ Leistungsschalter der drei Halbbrücken werden synchron betrieben, so, dass die elektrischen Potentiale an ihren Schaltspannungsanschlüssen zu jedem Zeitpunkt denselben Wert annehmen; die Regelung, z.B. der Ausgangsspannung des Umrichters, erfolgt genau gleich wie beim konventionellen einphasigen Umrichter mit zwei Spannungsniveaus,
   ∘ Verglichen mit dem Betrieb als konventioneller dreiphasiger Umrichter erfolgt ein effizienter Betrieb der Schaltung bei halber Zwischenkreisspannung (d.h. der Spannung, die zwischen den Plus- und Minusanschlüssen des Leistungsteils vorliegt); für die Beibehaltung der Ausgangsspannung des Umrichters wird daher das eingangsseitige Relais des Gleichspannungswandlerblocks im ersten Zustand betrieben.

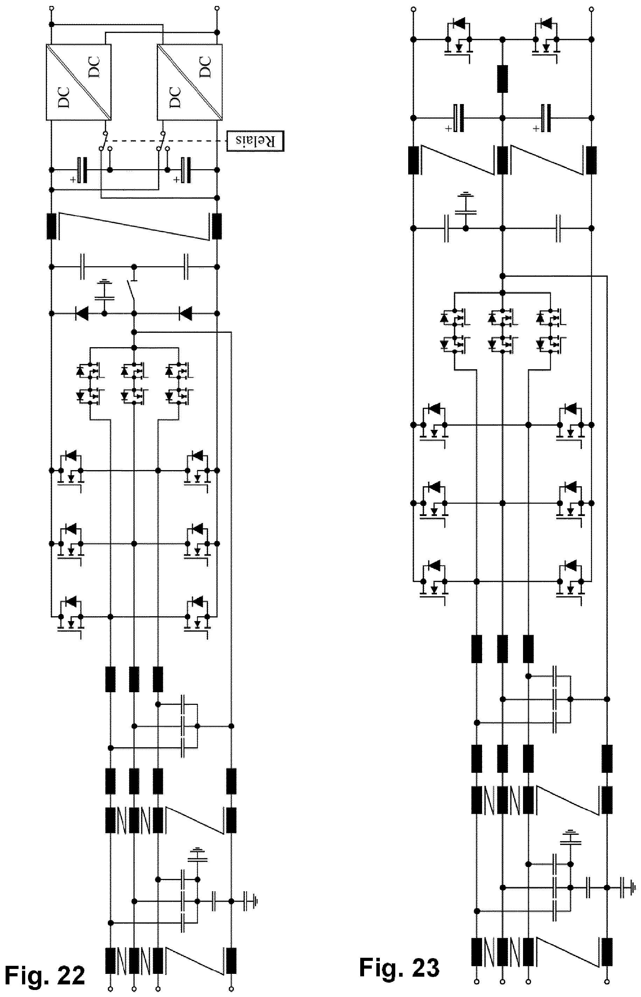

**Eine erste Ausführungsform des universellen dreiphasigen Umrichters mit aktiven T-Type Halbbrücken (****Fig. 22****)** ist erfindungsgemäß, und basiert auf der Ausführungsform der universellen mehrphasigen Umrichtertopologie mit Gleichspannungswandlerblock und weist m = 3 und folgende Baugruppen auf:
- jede der drei Halbbrücken ist realisiert durch die in Fig. 5 dargestellte Ausführungsform der aktiven T-Type Halbbrücke,
- vier Wechselspannungsfilterstufen,
   ∘ die erste Wechselspannungsfilterstufe wird durch die erste Ausführungsform der Wechselspannungsfilterstufe aus Fig. 7 realisiert, mit folgenden Anpassungen: die vierphasige Gleichtaktfilterdrossel entfällt, die vierte Filterspule entfällt, der vierte Filterkondensator wird durch einen Kurzschluss ersetzt und die zwei Gleichtaktfilterkondensatoren werden aus der Schaltung entfernt,
   ∘ die zweite Wechselspannungsfilterstufe wird durch die erste Ausführungsform der Wechselspannungsfilterstufe aus Fig. 7 realisiert, mit folgenden Anpassungen: der vierte Filterkondensator wird durch einen Kurzschluss ersetzt und die zwei Gleichtaktfilterkondensatoren werden aus der Schaltung entfernt,
   o∘ die dritte Wechselspannungsfilterstufe wird durch die erste Ausführungsform der Wechselspannungsfilterstufe aus Fig. 7 realisiert, mit folgenden Anpassungen: die vierphasige Gleichtaktfilterdrossel entfällt, alle vier Filterspulen entfallen, der erste Gleichtaktfilterkondensatoren wird durch einen Kurzschluss ersetzt und der zweite Gleichtaktfilterkondensator wird aus der Schaltung entfernt,
   ∘ die vierte Wechselspannungsfilterstufe wird durch die erste Ausführungsform der Wechselspannungsfilterstufe aus Fig. 7 realisiert, mit folgenden Anpassungen: alle vier Filterspulen entfallen, alle vier Filterkondensatoren werden aus der Schaltung entfernt und die zwei Gleichtaktfilterkondensatoren werden aus der Schaltung entfernt.
- drei Gleichspannungsblöcken:
   ∘ der erste Gleichspannungsblock wird durch die Ausführungsform des Umschaltblocks aus Fig. 10 realisiert,
   ∘ der zweite Gleichspannungsblock wird durch die erste Ausführungsform des Gleichspannungsfilterblocks aus Fig. 11 realisiert, mit folgenden Anpassungen: die zwei Filterspulen entfallen und die drei Gleichtaktfilterkondensatoren werden aus der Schaltung entfernt,
   ∘ der dritte Gleichspannungsblock wird durch die vierte Ausführungsform des Gleichspannungsfilterblocks aus Fig. 14 realisiert, mit folgender Anpassung: die drei Gleichtaktfilterkondensatoren werden aus der Schaltung entfernt,
- der Gleichspannungswandlerblock wird durch die zweite Ausführungsform des Gleichspannungswandlers, mit ausgangsseitiger Parallelschaltung der zwei Gleichspannungskonverter, realisiert.

### Funktionsweise:

- Betrieb als dreiphasiger Umrichter:
   ∘ die Leistungsschalter der drei Halbbrücken werden für den Betrieb als dreiphasiger Umrichter mit drei Spannungsniveaus geeignet angesteuert; die Regelung, z.B. der Ausgangsspannung des Umrichters, erfolgt genau gleich wie beim konventionellen dreiphasigen Umrichter mit drei Spannungsniveaus,
   ∘ Schalter des Umschaltblocks geschlossen,
   ∘ eingangsseitiges Relais des Gleichspannungswandlerblocks ist im zweiten Zustand.
- Betrieb als einphasiger Umrichter:
   ∘ Schalter des Umschaltblocks geöffnet,
   ∘ Leistungsschalter der drei Halbbrücken werden synchron betrieben, so, dass die elektrischen Potentiale an ihren Schaltspannungsanschlüssen zu jedem Zeitpunkt denselben Wert annehmen; die Regelung, z.B. der Ausgangsspannung des Umrichters, erfolgt genau gleich wie beim konventionellen einphasigen Umrichter mit zwei Spannungsniveaus,
   ∘ Verglichen mit dem Betrieb als konventioneller dreiphasiger Umrichter erfolgt ein effizienter Betrieb der Schaltung bei halber Zwischenkreisspannung (d.h. der Spannung, die zwischen den Plus- und Minusanschlüssen des Leistungsteils vorliegt); für die Beibehaltung der Ausgangsspannung des Umrichters wird daher das eingangsseitige Relais des Gleichspannungswandlerblocks im ersten Zustand betrieben.

**Eine zweite Ausführungsform des universellen dreiphasigen Umrichters mit aktiven T-Type Halbbrücken (****Fig. 23****)** ist nicht erfindungsgemäß, und basiert auf der Ausführungsform der universellen mehrphasigen Umrichtertopologie ohne Gleichspannungswandlerblock und weist m = 3 und folgende Baugruppen auf:
- jede der drei Halbbrücken ist realisiert durch die in Fig. 5 dargestellte Ausführungsform der aktiven T-Type Halbbrücke,
- vier Wechselspannungsfilterstufen:
   ∘ die erste Wechselspannungsfilterstufe wird durch die erste Ausführungsform der Wechselspannungsfilterstufe aus Fig. 7 realisiert, mit folgenden Anpassungen: die vierphasige Gleichtaktfilterdrossel entfällt, die vierte Filterspule entfällt, der vierte Filterkondensator wird durch einen Kurzschluss ersetzt und die zwei Gleichtaktfilterkondensatoren werden aus der Schaltung entfernt,
   ∘ die zweite Wechselspannungsfilterstufe wird durch die erste Ausführungsform der Wechselspannungsfilterstufe aus Fig. 7 realisiert, mit folgenden Anpassungen: der vierte Filterkondensator wird durch einen Kurzschluss ersetzt und die zwei Gleichtaktfilterkondensatoren werden aus der Schaltung entfernt.
   ∘ die dritte Wechselspannungsfilterstufe wird durch die erste Ausführungsform der Wechselspannungsfilterstufe aus Fig. 7 realisiert, mit folgenden Anpassungen: die vierphasige Gleichtaktfilterdrossel entfällt, alle vier Filterspulen entfallen, der erste Gleichtaktfilterkondensatoren wird durch einen Kurzschluss ersetzt und der zweite Gleichtaktfilterkondensator wird aus der Schaltung entfernt.
   ∘ die vierte Wechselspannungsfilterstufe wird durch die erste Ausführungsform der Wechselspannungsfilterstufe aus Fig. 7 realisiert, mit folgenden Anpassungen: alle vier Filterspulen entfallen, alle vier Filterkondensatoren werden aus der Schaltung entfernt und die zwei Gleichtaktfilterkondensatoren werden aus der Schaltung entfernt.
- zwei Gleichspannungsblöcken:
   ∘ der erste Gleichspannungsblock wird durch die erste Ausführungsform des Gleichspannungsfilterblocks aus Fig. 12 realisiert, mit folgenden Anpassungen: die drei Filterspulen entfallen, der erste Gleichtaktfilterkondensator wird aus der Schaltung entfernt und der dritte Gleichtaktfilterkondensator wird aus der Schaltung entfernt.
   ∘ der dritte Gleichspannungsblock wird durch den Gleichspannungsfilterblock mit aktiver Spannungssymmetrierung aus Fig. 15 realisiert.

### Funktionsweise:

- Betrieb als dreiphasiger Umrichter:
   ∘ die Leistungsschalter der drei Halbbrücken werden für den Betrieb als dreiphasiger Umrichter mit drei Spannungsniveaus geeignet angesteuert; die Regelung, z.B. der Ausgangsspannung des Umrichters, erfolgt genau gleich wie beim konventionellen dreiphasigen Umrichter mit drei Spannungsniveaus.
- Betrieb als konventioneller einphasiger Umrichter:
   ∘ Leistungsschalter der drei Halbbrücken werden synchron betrieben, so, dass die elektrischen Potentiale an ihren Schaltspannungsanschlüssen zu jedem Zeitpunkt denselben Wert annehmen; die Regelung, z.B. der Ausgangsspannung des Umrichters, erfolgt genau gleich wie beim konventionellen einphasigen Umrichter mit drei Spannungsniveaus.

Verglichen mit der Ausführungsform des universellen dreiphasigen Umrichters mit zwei Spannungsniveaus (Fig. 21) und der ersten Ausführungsform des universellen dreiphasigen Umrichters mit aktiven T-Type Halbbrücken (Fig. 22) hat die zweite Ausführungsform des universellen dreiphasigen Umrichters mit aktiven T-Type Halbbrücken (Fig. 23) den Vorteil, dass Umschaltblock und Gleichspannungswandlerblock entfallen, jedoch den Nachteil, dass für den sinnvollen technischen Betrieb der Gleichspannungsfilterblock mit aktiver Spannungssymmetrierung erforderlich ist. Zwar kann der Gleichspannungsfilterblock mit aktiver Spannungssymmetrierung grundsätzlich entfallen, jedoch wären dann für den praktischen Betrieb als einphasiger Umrichter vergleichsweise hohe Kapazitätswerte für die Filterkondensatoren des ersten Gleichspannungsblocks erforderlich.

## Patentansprüche

1. Mehrphasige Umrichtertopologie zur Übertragung von elektrischer Energie von einem Wechselspannungseingang (25) mit *m* Netzphasenanschlüssen (28) zu einem Gleichspannungsausgang (26) oder umgekehrt, aufweisend
einen Leistungsteil (21) mit Halbbrücken (211, 212, 213) zum Schalten von Strömen, wobei jede der Halbbrücken einen Plusanschluss und einen Minusanschluss umfasst,
ein zwischen den Leistungsteil (21) und dem Wechselspannungseingang (25) geschaltetes Wechselspannungsfilter (22), aufweisend mindestens eine Wechselspannungsfilterstufe (221, 222, 223) mit *m* + 1 Eingangsanschlüssen, m + 1 Ausgangsanschlüssen;
einen oder mehrere zwischen dem Leistungsteil (21) und dem Gleichspannungsausgang (26) geschalteten Gleichspannungsblöcke (23) zum Filtern von Gleichspannungen, wobei jeder Gleichspannungsblock einen Eingangsklemmblock, aufweisend einen Plusanschluss und einen Minusanschluss, und einen Ausgangsklemmblock, aufweisend einen Plusanschluss und einen Minusanschluss, umfasst; und
einen Gleichspannungswandlerblock (24);
wobei der Plusanschluss jeder Halbbrücke des Leistungsteils (21) mit dem Plusanschluss des Eingangsklemmblocks des ersten Gleichspannungsblocks und der Minusanschluss jeder Halbbrücke des Leistungsteils (21) mit dem Minusanschluss des Eingangsklemmblocks des ersten Gleichspannungsblocks verbunden ist,
wobei im einphasigen Betrieb, die *m* Netzphasenanschlüsse (28) parallel zueinander geschaltet sind und einen ersten Phasenanschluss für den Anschluss einer einphasigen Wechselspannung bilden, und ein Neutralleiteranschluss des Wechselspannungsfilters einen Neutralleiteranschluss (27) des Wechselspannungseingangs (25) und einen zweiten Phasenanschluss für den Anschluss der einphasigen Wechselspannung bildet,
**dadurch gekennzeichnet, dass**:
die mindestens eine Wechselspannungsfilterstufe einen Erdungsanschluss umfasst; und
die Halbbrücken (2111, 2112, 2113) des Leistungsteils (211) einen Umrichter mit drei Spannungsniveaus bilden; und
der Gleichspannungswandlerblock (24) zwei Gleichspannungswandler (161, 162) aufweist, deren Eingänge wahlweise zwischen einer seriellen und einer parallelen Anordnung umschaltbar sind, und deren Ausgänge parallel geschaltet den Gleichspannungsausgang (26) bilden; und
die mehrphasige Umrichtertopologie eine Steuerung aufweist, die dazu ausgebildet ist,
die mehrphasige Umrichtertopologie wahlweise in einem mehrphasigen Betrieb mit drei Spannungsniveaus oder in einem einphasigen Betrieb mit zwei Spannungsniveaus zu betreiben, wobei die Spannung zwischen den Plus- und Minusanschlüssen des Leistungsteils im einphasigen Betrieb gegenüber dem mehrphasigen Betrieb halbiert wird, und
die Eingänge der zwei Gleichspannungswandler (161, 162) im mehrphasigen Betrieb auf die serielle Anordnung und im einphasigen Betrieb auf die parallele Anordnung geschaltet sind.

2. Mehrphasige Umrichtertopologie gemäss Anspruch 1, wobei das Wechselspannungsfilter (22) mindestens eine (*m*+1)-phasige Gleichtaktfilterdrossel aufweist, welche beim einphasigen Betrieb der mehrphasigen Umrichtertopologie nicht sättigt.

3. Mehrphasige Umrichtertopologie gemäss Anspruch 2, wobei alle m+1 Wicklungen der mindestens einen (m+1)-phasigen Gleichtaktfilterdrossel dieselbe Anzahl Windungen und denselben Wicklungssinn aufweisen.

4. Mehrphasige Umrichtertopologie gemäss Anspruch 3, wobei in den ersten *m* Wicklungen (171 ... 175) vorliegende Drähte denselben ersten Leiterquerschnitt aufweisen, und ein in der (*m*+1)-ten Wicklung (176; (181 ... 185) vorliegender Draht einen Leiterquerschnitt aufweist, welcher das *m*-fache des ersten Leiterquerschnitts beträgt.

5. Mehrphasige Umrichtertopologie gemäss einem der vorangehenden Ansprüche, wobei:
der Leistungsteil (21) einen Mittelpunktspannungsanschluss umfasst verbunden mit einem Mittelpunktspannungsanschluss des Wechselspannungsfilters (22) und mit einem Mittelpunktspannungsanschluss des Eingangsklemmblocks,
der (*m*+1)-te Ausgangsanschluss einer ersten Wechselspannungsfilterstufe (221) den Mittelpunktspannungsanschluss des Wechselspannungsfilters bildet, und
der (*m*+1)-te Eingangsanschluss der letzten Wechselspannungsfilterstufe den Neutralleiteranschluss des Wechselspannungsfilters bildet.

## Claims

1. Multi-phase converter topology for the transmission of electrical energy from an alternating voltage input (25) having *m* grid phase connections (28) to a DC voltage output (26) or vice versa, the multi-phase converter comprising
a power part (21) comprising half-bridges (211, 212, 213) for switching currents, each of the half-bridges comprising a positive connection and a negative connection,
an alternating voltage filter (22) connected between the power part (21) and the alternating voltage input (25), the alternating voltage filter comprising at least one alternating voltage filter stage (221, 222, 223) having *m*+1 input connections, *m*+1 output connections; one or more DC voltage blocks (23) connected between the power part (21) and the DC voltage output (26) for filtering DC voltages,
each DC voltage block comprising an input terminal block having a positive connection and a negative connection, and an output terminal block having a positive connection and a negative connection; and
a DC/DC converter block (24);
the positive connection of each half-bridge of the power part (21) being connected to the positive connection of the input terminal block of the first DC voltage block, and the negative connection of each half-bridge of the power part (21) being connected to the negative connection of the input terminal block of the first DC voltage block,
in single-phase operation, the *m* grid phase connections (28) being connected in parallel to one another and forming a first phase connection for the connection of a single-phase alternating voltage, and a neutral conductor connection of the alternating voltage filter forming a neutral conductor connection (27) of the alternating voltage input (25) and a second phase connection for the connection of the single-phase alternating voltage,
**characterized in that:**
the at least one alternating voltage filter stage comprises a ground connection; and
the half-bridges (2111, 2112, 2113) of the power part (211) form a converter having three voltage levels; and
the DC/DC converter block (24) has two DC/DC converters (161, 162), the inputs of which are selectively switchable between a series and a parallel arrangement, and the outputs of which, connected in parallel, form the DC voltage output (26); and
the multi-phase converter topology has a control designed to selectively operate the multi-phase converter topology in multi-phase operation having three voltage levels or in single-phase operation having two voltage levels, the voltage between the positive and negative connections of the power part being halved in single-phase operation compared to multi-phase operation, and
the inputs of the two DC/DC converters (161, 162) are switched to the series arrangement in multi-phase operation and to the parallel arrangement in single-phase operation.

2. Multi-phase converter topology according to claim 1, wherein the alternating voltage filter (22) has at least one (*m*+1)-phase common-mode filter choke, which does not saturate during single-phase operation of the multi-phase converter topology.

3. Multi-phase converter topology according to claim 2, wherein all m+1 windings of the at least one (m+1)-phase common-mode filter choke have the same number of turns and the same winding direction.

4. Multi-phase converter topology according to claim 3, wherein wires present in the first m windings (171 ... 175) have the same first conductor cross section, and a wire present in the (*m*+1)-th winding (176; (181 ... 185) has a conductor cross section which is *m*-times the cross section of the first conductor.

5. Multi-phase converter topology according to any of the preceding claims,
wherein:
the power part (21) comprises a midpoint voltage connection which is connected to a midpoint voltage connection of the alternating voltage filter (22)
and to a midpoint voltage connection of the input terminal block,
the (m+1)-th output connection of a first alternating voltage filter stage (221) forms the midpoint voltage connection of the alternating voltage filter, and
the (*m*+1)-th input connection of the final alternating voltage filter stage forms the neutral conductor connection of the alternating voltage filter.

## Revendications

1. Topologie de convertisseur polyphasé pour le transport d'énergie électrique depuis
une entrée de tension alternative (25) comportant m bornes de phase de réseau (28) vers une sortie de tension continue (26) ou inversement, présentant
une partie de puissance (21) comportant des demi-ponts (211, 212, 213) pour la commutation de courants, dans laquelle chacun des demi-ponts comprend une borne positive et une borne négative,
un filtre de tension alternative (22) monté entre la partie de puissance (21) et l'entrée de tension alternative (25), présentant au moins un étage de filtre de tension alternative (221, 222, 223) comportant *m +* 1 bornes d'entrée, *m +* 1 bornes de sortie ;
un ou plusieurs blocs de tension continue (23) montés entre la partie de puissance (21) et la sortie de tension continue (26) pour le filtrage de tensions continues, dans laquelle chaque bloc de tension continue comprend un bornier d'entrée présentant une borne positive et une borne négative et un bornier de sortie présentant une borne positive et une borne négative ; et
un bloc à convertisseurs de tension continue (24) ;
dans laquelle la borne positive de chaque demi-pont de la partie de puissance (21) est connectée à la borne positive du bornier d'entrée du premier bloc de tension continue, et la borne négative de chaque demi-pont de la partie de puissance (21) est connectée à la borne négative du bornier d'entrée du premier bloc de tension continue,
dans laquelle, dans un mode de fonctionnement monophasé, les *m* bornes de phase de réseau (28) sont montées en parallèle les unes par rapport aux autres et forment une première borne de phase pour le raccordement d'une tension alternative monophasée, et une borne de ligne de neutre du filtre de tension alternative forme une borne de ligne de neutre (27) de l'entrée de tension alternative (25) et une seconde borne de phase pour le raccordement de la tension alternative monophasée,
**caractérisée en ce que :**
l'au moins un étage de filtre de tension alternative comprend une borne de terre ; et
les demi-ponts (2111, 2112, 2113) de la partie de puissance (211) forment un convertisseur comportant trois niveaux de tension ; et
le bloc à convertisseurs de tension continue (24) présente deux convertisseurs de tension continue (161, 162) dont les entrées peuvent être commutées au choix entre une configuration en série et une configuration en parallèle, et dont les
sorties, montées en parallèle, forment la sortie de tension continue (26) ; et
la topologie de convertisseur polyphasé présente une commande configurée pour
faire fonctionner la topologie de convertisseur polyphasé au choix dans un mode de fonctionnement polyphasé comportant trois niveaux de tension ou dans un mode de fonctionnement monophasé comportant deux niveaux de tension, dans laquelle la tension entre les bornes positive et négative de la partie de puissance est réduite de moitié dans le mode de fonctionnement monophasé par rapport à la tension dans le mode de fonctionnement polyphasé, et
les entrées des deux convertisseurs de tension continue (161, 162) sont montées dans la configuration en série dans le mode de fonctionnement polyphasé et dans la configuration en parallèle dans le mode de fonctionnement monophasé.

2. Topologie de convertisseur polyphasé selon la revendication 1, dans laquelle le filtre de tension alternative (22) présente au moins une bobine de filtrage en mode commun à *(m* + 1) phases qui ne sature pas dans le mode de fonctionnement monophasé de la topologie de convertisseur polyphasé.

3. Topologie de convertisseur polyphasé selon la revendication 2, dans laquelle tous les m + 1 enroulements de l'au moins une bobine de filtrage en mode commun à (m + 1) phases présentent le même nombre de spires et le même sens d'enroulement.

4. Topologie de convertisseur polyphasé selon la revendication 3, dans laquelle des fils présents dans les premiers *m* enroulements (171 ... 175) présentent la même première section transversale de conducteur, et un fil présent dans le (*m* + 1)-ième enroulement (176 ; (181 ... 185) présente une section transversale de conducteur qui est égale à *m* fois la première section transversale de conducteur.

5. Topologie de convertisseur polyphasé selon l'une des revendications précédentes,
dans laquelle :
la partie de puissance (21) comprend une borne de tension au point milieu connectée à une borne de tension au point milieu du filtre de tension alternative (22)
et à une borne de tension au point milieu du bornier d'entrée,
la (*m* + 1)-ième borne de sortie d'un premier étage de filtre de tension alternative (221) constitue la borne de tension au point milieu du filtre de tension alternative, et
la (*m* + 1)-ième borne d'entrée du dernier étage de filtre de tension alternative constitue la borne de ligne de neutre du filtre de tension alternative.
